# EUROPEAN PATENT APPLICATION

(11) **EP 4 195 839 A1**
(43) Date of publication of application: **14.06.2023**
(21) Application number: 20948309.8
(22) Date of filing: 06.08.2020
(51) Int. Cl.: H04W 72/10, H04W 72/12

(54) **TERMINAL, WIRELESS COMMUNICATION METHOD, AND BASE STATION**

(71) Applicant: NTT DOCOMO, INC., Chiyoda-Ku Tokyo 100-6150 (JP)
(72) Inventor: TAKAHASHI, Yuki, Tokyo 100-6150 (JP); KUMAGAI, Shinya, Tokyo 100-6150 (JP); NAGATA, Satoshi, Tokyo 100-6150 (JP)
(74) Representative: Hoffmann Eitle
(86) International application number: PCT/JP2020/030266
(87) International publication number: WO 2022/029976

(57) **Abstract**

A terminal according to an aspect of the present disclosure includes: a receiving section that receives information regarding priority of UL transmission; and a control section that, in a case where a plurality of UL transmissions with different priorities overlap in a time domain, controls transmission processing of the plurality of UL transmissions on the basis of at least one of a UL signal included in each of UL transmissions, a UL channel used for each of the UL transmissions, and a resource of an uplink control channel used for each of the UL transmissions.

## Description

### Technical Field

The present disclosure relates to a terminal, a radio communication method, and a base station in next-generation mobile communication systems.

### Background Art

In a universal mobile telecommunications system (UMTS) network, specifications of long term evolution (LTE) have been drafted for the purpose of further increasing data rates, providing low latency, and the like (Non Patent Literature 1). In addition, the specifications of LTE-Advanced (3GPP Rel. 10 to 14) have been drafted for the purpose of further increasing capacity and advancement of LTE (third generation partnership project (3GPP) release (Rel.) 8 and 9).

Successor systems to LTE (for example, also referred to as 5th generation mobile communication system (5G), 5G+ (plus), New Radio (NR), or 3GPP Rel. 15 or later) are also being studied.

### Citation List

### Non Patent Literature

Non Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)", April 2010

### Summary of Invention

### Technical Problem

Future radio communication systems (such as 5G or NR) are expected to involve a plurality of services (also referred to as use cases, communication types, or the like) having different requirements such as higher speed and larger capacity (for example, enhanced mobile broad band (eMBB)), a massive amount of terminals (for example, massive machine type communication (mMTC) or Internet of Things (IoT)), and ultrahigh reliability and low latency (for example, ultra-reliable and low-latency communications (URLLC)).

For example, in Rel. 16 and later, a scheme in which priority is configured on a signal/channel and communication is controlled on the basis of the priority configured on each signal/channel is studied. For example, it is assumed that, in a case where a plurality of signals/channels overlap, transmission/reception is controlled on the basis of the priority of each signal/channel.

On the other hand, there may be also a case where a plurality of UL transmissions transmitted on different carriers (or cells or CCs) overlap in the time domain and the priorities of a plurality of UL transmissions are different. How to control UL transmission in a case where, in this way, a plurality of UL transmissions with different priorities are configured/scheduled on different carriers in the same time domain has not been sufficiently studied.

Thus, an object of the present disclosure is to provide a terminal, a radio communication method, and a base station that can appropriately control one or more UL transmissions in which priority configuring is supported.

### Solution to Problem

A terminal according to an aspect of the present disclosure includes: a receiving section that receives information regarding priority of UL transmission; and a control section that, in a case where a plurality of UL transmissions with different priorities overlap in a time domain, controls transmission processing of the plurality of UL transmissions on the basis of at least one of a UL signal included in each of UL transmissions, a UL channel used for each of the UL transmissions, and a resource of an uplink control channel used for each of the UL transmissions.

### Advantageous Effects of Invention

According to an aspect of the present disclosure, one or more UL transmissions in which priority configuring is supported can be appropriately controlled.

### Brief Description of Drawings

Fig. 1A and Fig. 1B are diagrams illustrating examples of UL transmission control based on priority.
Fig. 2 is a diagram illustrating another example of UL transmission control based on priority.
Fig. 3 is a diagram illustrating an example of a case where a plurality of HARQ-ACK codebooks are transmitted in a given slot.
Fig. 4 is a diagram illustrating an example of a case where a plurality of HARQ-ACK codebooks overlap in the time domain.
Fig. 5 is a diagram illustrating an example of UL collision cases and applicable options.
Fig. 6A to Fig. 6C are diagrams illustrating examples of UL transmission control.
Fig. 7 is a diagram illustrating another example of UL collision cases and applicable options.
Fig. 8 is a diagram illustrating another example of UL collision cases and applicable options.
Fig. 9 is a diagram illustrating another example of UL collision cases and applicable options.
Fig. 10 is a diagram illustrating an example of a schematic configuration of a radio communication system according to one embodiment.
Fig. 11 is a diagram illustrating an example of a configuration of a base station according to one embodiment.
Fig. 12 is a diagram illustrating an example of a configuration of a user terminal according to one embodiment.
Fig. 13 is a diagram illustrating an example of a hardware configuration of the base station and the user terminal according to one embodiment.

### Description of Embodiments

### <Traffic Type>

Future radio communication systems (for example, NR) are expected to involve traffic types (also referred to as services, service types, communication types, use cases, or the like) such as an enhanced mobile broadband (eMBB), machine type communications that embody multiple simultaneous connection (for example, massive machine type communications (mMTC), and Internet of Things (IoT)), and ultra-reliable and low-latency communications (URLLC). For example, it is required that URLLC have smaller latency and higher reliability than eMBB.

The traffic type may be identified in a physical layer on the basis of at least one of the following.
- Logical channels with different priorities
- Modulation and coding scheme (MCS) table (MCS index table)
- Channel quality indication (CQI) table
- DCI format
- System information-radio network temporary identifier (RNTI) used for scrambling (masking) of cyclic redundancy check (CRC) bit included in (added to) DCI (DCI format)
- Radio resource control (RRC) parameter
- Specific RNTI (for example, RNTI for URLLC, MCS-C-RNTI, or the like)
- Search space
- Given field in DCI (for example, newly added field or reuse of existing field)

Specifically, a traffic type of the HARQ-ACK for a PDSCH may be determined on the basis of at least one of the following.
- MCS index table used to determine at least one of the modulation order, target code rate, and transport block size (TBS) of the PDSCH (for example, whether to use MCS index table 3)
- RNTI used for CRC scrambling of DCI used for scheduling the PDSCH

### (for example, whether CRC scrambled with C-RNTI or MCS-C-RNTI)

A traffic type of the SR may be determined on the basis of a higher layer parameter used as an SR identifier (SR-ID). The higher layer parameter may indicate whether the traffic type of the SR is eMBB or URLLC.

A traffic type of the CSI may be determined on the basis of configuration information related to CSI report (CSIreportsetting), a DCI type used for triggering, a DCI transmission parameter, or the like. The configuration information, the DCI type, or the like may indicate whether the traffic type of the CSI is eMBB or URLLC. The configuration information may be a higher layer parameter.

A traffic type of the PUSCH may be determined on the basis of at least one of the following.
- MCS index table used to determine at least one of modulation order, target code rate, and transport block size (TBS) of PUSCH (for example, whether or not to use MCS index table 3).
- RNTI used for CRC scrambling of DCI used for scheduling the PUSCH

### (for example, whether CRC scrambled with C-RNTI or MCS-C-RNTI)

A traffic type may be associated with communication requirements (requirements and required conditions such as latency and error rate), a data type (voice, data, etc.), or the like.

A difference between URLLC requirements and eMBB requirements may be that URLLC is lower in latency than eMBB or that URLLC requirements include reliability requirements.

For example, eMBB user (U)-plane latency requirements may include that downlink U-plane latency is 4 ms and that uplink U-plane latency is 4 ms. Meanwhile, URLLC U-plane latency requirements may include that downlink U-plane latency is 0.5 ms and that uplink U-plane latency is 0.5 ms. Furthermore, the URLLC reliability requirements may include that a 32-byte error rate is 10⁻⁵ for a U-plane latency of 1 ms.

In contrast, enhancement of the reliability of traffic for unicast data is mainly studied as enhanced ultra reliable and low latency communications (eURLLC). Hereinafter, in a case where URLLC and eURLLC are not distinguished, they are simply referred to as URLLC.

### <Priority Configuration>

In the NR after Rel. 16, configuring priorities at a plurality of levels (for example, two levels) for a given signal or channel is being studied. For example, it is assumed that communication is controlled (for example, transmission control at the time of collision, and the like) by configuring different priorities for every signal or channel each corresponding to different traffic types (also referred to as services, service types, communication types, use cases, and the like). This makes it possible to control communication by configuring, for the same signal or channel, different priorities depending on a service type or the like.

Priority may be configured on at least one of a signal (for example, UCI such as a HARQ-ACK, a reference signal, and the like), a channel (a PDSCH, a PUSCH, a PUCCH, and the like), a reference signal (for example, channel state information (CSI), a sounding reference signal (SRS), and the like), a scheduling request (SR), and a HARQ-ACK codebook. Further, priority may be configured on each of a PUCCH used for SR transmission, a PUCCH used for HARQ-ACK transmission, and a PUCCH used for CSI transmission.

The priority may be defined by a first priority (for example, high) and a second priority (for example, low) that is lower than the first priority. Alternatively, three or more types of priorities may be configured.

For example, priorities may be configured for HARQ-ACK for PDSCH that is dynamically scheduled, HARQ-ACK for semi-persistent PDSCH (semi-persistent scheduling (SPS) PDSCH), and HARQ-ACK for SPS PDSCH release. Alternatively, priorities may be configured for HARQ-ACK codebooks corresponding to these HARQ-ACKs. Note that, in a case where a priority is configured to the PDSCH, the priority of the PDSCH may be replaced with the priority of HARQ-ACK for the PDSCH.

In addition, priorities may be configured to a dynamic grant-based PUSCH, a configured grant-based PUSCH, or the like.

Notification of the information about the priority may be provided from a base station to the UE by using at least one of higher layer signaling or DCI. For example, the priority of a scheduling request may be configured by a higher layer parameter (for example, schedulingRequestPriority). The priority of a HARQ-ACK for a PDSCH (for example, a dynamic PDSCH) scheduled by DCI may be notified by the DCI. The priority of a HARQ-ACK for an SPS PDSCH may be configured by a higher parameter (for example, HARQ-ACK-Codebook-indicator-forSPS), or may be notified by DCI indicating the activation of the SPS PDSCH. A given priority (for example, low) may be configured on P-CSI/SP-CSI transmitted by a PUCCH. On the other hand, the priority of A-CSI/SP-CSI transmitted by a PUSCH may be notified by DCI (for example, trigger DCI or activation DCI).

The priority of a dynamic grant-based PUSCH may be notified by DCI for scheduling the PUSCH. The priority of a configuration grant-based PUSCH may be configured by a higher layer parameter (for example, priority). A given priority (for example, low) may be configured on a P-SRS/SP-SRS or an A-SRS triggered by DCI (for example, DCI format 0_1/DCI format 2_3).

### (Overlap of UL transmission)

The UE may control UL transmission on the basis of the priorities in a case where a plurality of UL signals or UL channels overlap (or collide) with each other.

The overlap between a plurality of UL signals/UL channels may be a case where time resources (or time resources and frequency resources) of the plurality of UL signals or UL channels overlap with each other or a case where transmission timing of the plurality of UL signals or UL channels overlap with each other. The time resource may be replaced with a time domain. The time resource may be in units of symbols, slots, subframes, and symbols.

The plurality of UL signals/UL channels overlapping with the same UE (for example, intra-UE) may mean that the plurality of UL signals/UL channels overlap at least in the same time resource (for example, symbol). Further, UL signals/UL channels colliding in different UEs (for example, inter-UE) may mean that the plurality of UL signals/UL channels overlap in the same time resource (for example, symbol) and frequency resource (for example, RB).

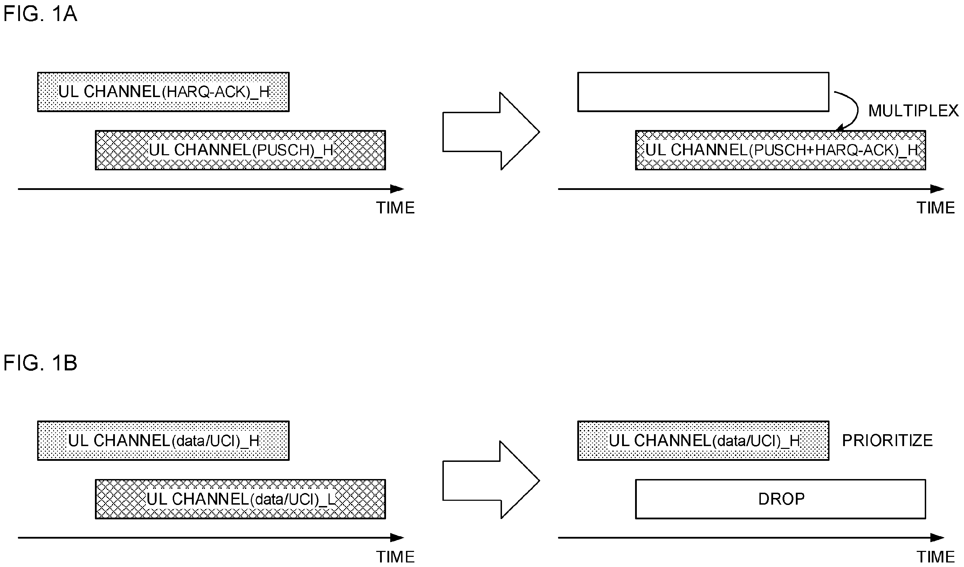

For example, in a case where a plurality of UL signals/UL channels with the same priority overlap, the UE makes control such that the plurality of UL signals/UL channels are multiplexed to one UL channel and transmitted (see Fig. 1A).

Fig. 1A illustrates a case where a HARQ-ACK (or a PUCCH for HARQ-ACK transmission) on which a first priority (high) is configured and UL data/UL-SCH (or a PUSCH for UL data/UL-SCH transmission) on which the first priority (high) is configured overlap. In this case, the UE multiplexes (or maps) the HARQ-ACK to the PUSCH, and transmits both the UL data and the HARQ-ACK.

In a case where a plurality of UL signals/UL channels with different priorities overlap, the UE may make control such that UL transmission with high priority is performed (for example, UL transmission with high priority is prioritized) and UL transmission with low priority is not performed (for example, is dropped) (see Fig. 1B).

Fig. 1B illustrates a case where UL data/HARQ-ACK (or a UL channel for UL data/HARQ-ACK transmission) on which a first priority (high) is configured and UL data/HARQ-ACK (or a UL channel for UL data/HARQ-ACK transmission) on which a second priority (low) is configured overlap. In this case, the UE makes control such that UL data/HARQ-ACK with low priority is dropped and UL data/HARQ-ACK with high priority is prioritized and transmitted. Note that the UE may change (for example, defer or shift) the transmission timing of UL transmission with low priority.

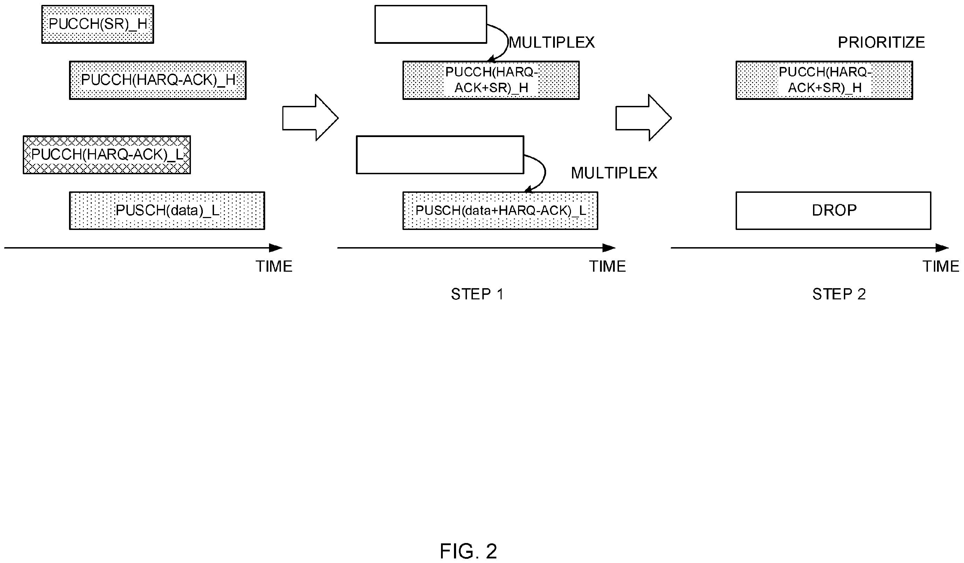

In a case where more than two (or three or more) UL signals/UL channels overlap in the time domain, transmission may be controlled by two steps (see Fig 2).

In step 1, one UL channel for multiplexing UL signals transmitted by UL transmissions with the same priority is selected. In Fig. 2, an SR (or a PUCCH for SR transmission) and a HARQ-ACK (or a PUCCH for HARQ-ACK transmission) with a first priority (high) may be multiplexed to a given UL channel (herein, a PUCCH for HARQ-ACK transmission). Similarly, a HARQ-ACK (or a PUCCH for HARQ-ACK transmission) and data (or a PUSCH for data/UL-SCH transmission) with a second priority (low) may be multiplexed to a given UL channel (herein, a PUSCH).

In step 2, control may be made such that, for UL transmissions with different priorities, UL transmission with high priority is prioritized and transmitted and UL transmission with low priority is dropped. In Fig. 2, the SR and the PUCCH for HARQ-ACK transmission with the first priority (high) may be prioritized and transmitted, and the HARQ-ACK and the PUSCH for data transmission with the second priority (low) may be dropped.

In this way, the UE can resolve collisions between UL transmissions with the same priority by step 1, and can resolve collisions between UL transmissions with different priorities by step 2.

### (Multiple HARQ-ACK codebooks)

In Rel. 16 and later, a maximum of N HARQ-ACK codebooks may be allowed to be configure in a given number of slots (for example, one slot). N may be, for example, 2. For example, in a case where N is 2, the UE may configure, in a given slot, two codebooks for HARQ-ACKs with different priorities (or codebooks corresponding to different priorities/different service types), and may feedback the codebooks.

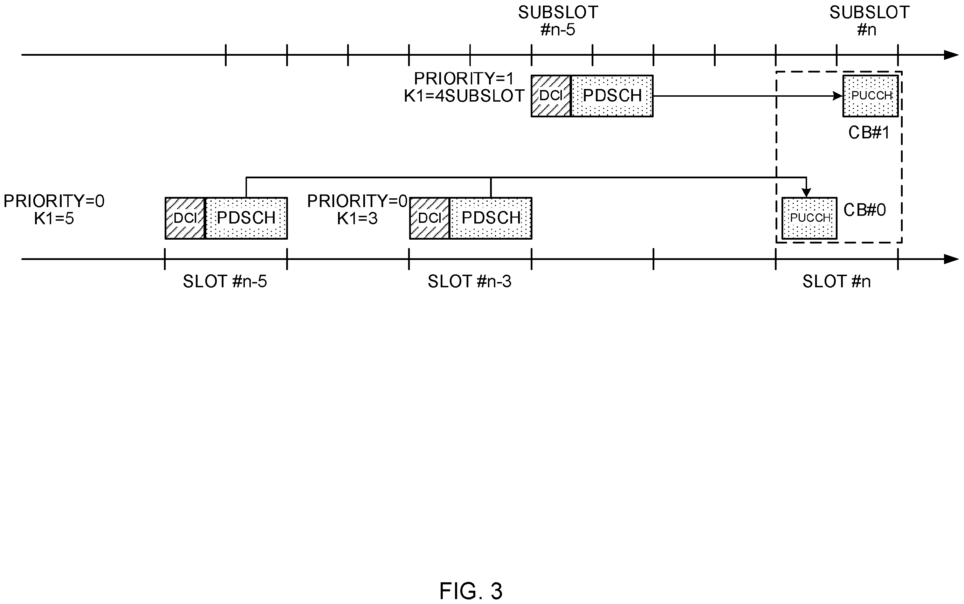

The UE may control the generation of a HARQ-ACK codebook (for example, the generation of HARQ-ACK bits in a HARQ-ACK codebook) on the basis of a value of a priority notification field (for example, a priority indicator field) included in DCI corresponding to each PDSCH. Fig. 3 illustrates an example of a case where two HARQ-ACK codebooks (herein, CB #0 and CB #1) corresponding to different priorities are generated/fed back in slot #n. CB #0 corresponds to a second priority (low) or eMBB, and CB #1 corresponds to a first priority (high) or URLLC.

In Fig. 3, the DCI corresponding to a PDSCH transmitted in slot #n-5 notifies that the feedback timing of the HARQ-ACK is slot #n (K1 = 5) and the HARQ-ACK has the second priority (low). The DCI corresponding to a PDSCH transmitted in slot #n-3 notifies that the feedback timing of the HARQ-ACK is slot #n (K1 = 3) and the HARQ-ACK has the second priority (low).

In Fig. 3, the DCI corresponding to a PDSCH transmitted in slot #n-2 (subslots #n-4 and #n-5) notifies that the feedback timing of the HARQ-ACK is slot #n (subslot #n) (a "K1 = 5" subslot) and the HARQ-ACK has the first priority (high).

In this case, the UE may generate and feedback two HARQ-ACK codebooks (CB #0 and CB #1) in slot #n.

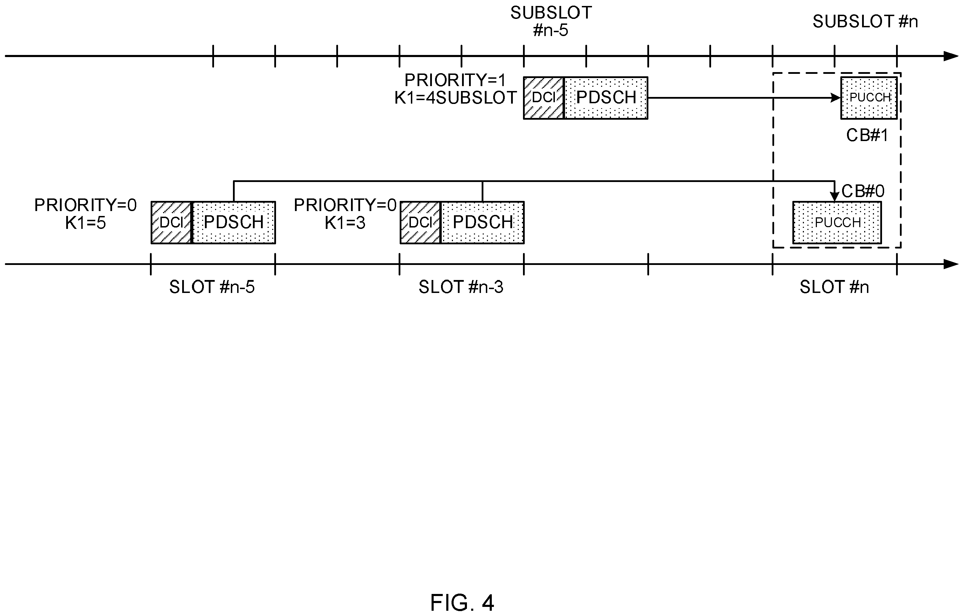

On the other hand, there may be also a case where a UL resource (for example, a PUCCH/PUSCH) for CB #0 and a UL resource for CB #1 overlap in the time domain (see Fig. 4). In such a case, a scheme in which the transmission of HARQ-ACKs is controlled on the basis of the priorities corresponding to the HARQ-ACKs (or CBs) is conceivable. Specifically, a CB with high priority is transmitted, and a CB with low priority is dropped.

A scheme in which, in a case where a plurality of UL transmissions overlap in the time domain in this way, the UE makes control such that only a UL transmission (or UL channel/UL signal) with high priority is transmitted is studied.

On the other hand, a scheme is conceivable in which, even in a case where a plurality of UL transmissions with different priorities overlap in the time domain, the plurality of UL transmissions are allowed depending on the communication environment/communication condition/UE capability. By the plurality of UL transmissions being supported, usefulness is provided from the viewpoint of latency reduction and spectral efficiency.

The communication environment/communication condition/UE capability may be the capability of transmission processing/reception processing supported by a cell or a UE where a plurality of UL transmissions are transmitted (for example, an RF circuit or the like included in the UE). For example, in a case where a plurality of UL transmissions with different priorities are scheduled in an inter-cell region supported by different RFs or in like cases, the plurality of UL transmissions (for example, simultaneous transmission) may be supported.

However, in a case where transmission of a plurality of UL transmissions with different priorities is supported/allowed, how to control UL transmission is a problem.

With a focus on the point that, even in a case where a plurality of UL transmissions with different priorities overlap in the time domain, the plurality of UL transmissions are supported/allowed depending on the communication environment/communication condition/UE capability, the present inventors have studied control of the plurality of UL transmissions, and have conceived an aspect of the present embodiment.

Hereinafter, embodiments according to the present disclosure will be described in detail with reference to the drawings. The configurations described in each of the aspects may be applied singly or in combination.

In the present disclosure, "A/B" may be read as at least one of A or B, and "A/B/C" may be read as at least one of A, B, or C.

In the following description, two levels including a first priority (high) and a second priority (low) will be described as examples of priorities for the UL transmission, however, the priorities are not limited to only two levels. Three or more types of priorities may be configured.

In the present disclosure, the UL transmission, the UL channel, and the UL signal may be replaced with each other. Further, in the present disclosure, the carrier, the cell, the CC, the BWP, and the band may be read as interchangeable with each other. Further, in the present disclosure, "transmitted" may be read as scheduled, configured, or allocated. Further, in the present disclosure, the time domain may be read as a time resource or a symbol. Further, in the present disclosure, the overlap may be read as a collision or a redundancy. Further, in the present disclosure, the drop may be read as a puncture or a cancel.

### (Aspects)

In the present aspect, an example of UL transmission control in a case where a plurality of UL transmissions with different priorities overlap in the time domain will be described.

In a case where a plurality of UL transmissions with different priorities overlap/collide in the time domain, the transmission processing of the plurality of UL transmissions may be controlled on the basis of at least one of a UL signal (for example, a signal type) included in each of UL transmission, a UL channel (for example, a UL channel type) used for each of the UL transmissions, and a resource of an uplink control channel used for each of the UL transmissions.

Hereinbelow, UL transmission control in a case where a first UL transmission and a second UL transmission with different priorities overlap in the time domain (a collision case) is described. The first UL transmission and the second UL transmission may each include at least one of a HARQ-ACK, a scheduling request (SR), and channel state information (CSI). The collision case shown below is an example, and the present invention may be similarly applied to other collision cases.

### <Collision between a HARQ-ACK and a HARQ-ACK>

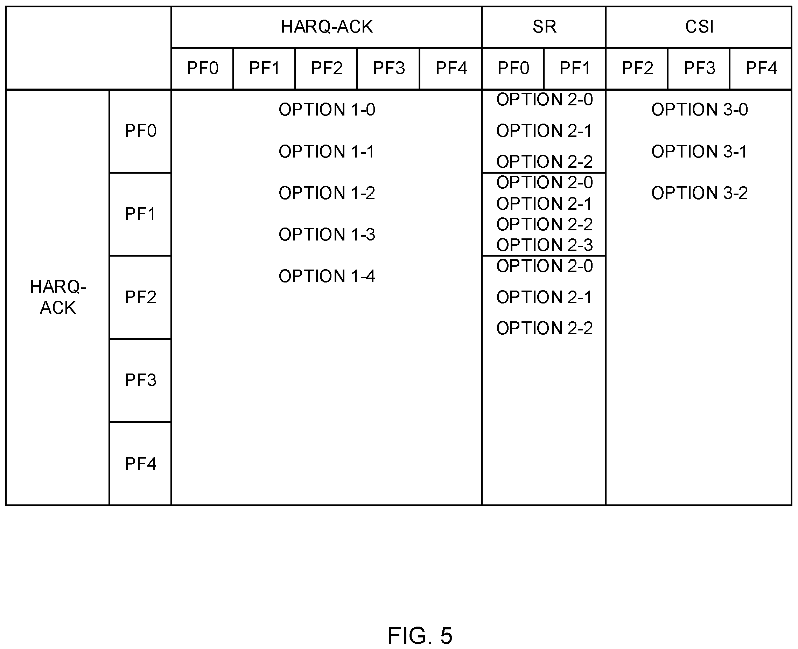

In a case where a first UL transmission (a HARQ-ACK) and a second UL transmission (a HARQ-ACK) with different priorities overlap in the time domain, the UE may control UL transmission on the basis of at least one of option 1-0 to option 1-4 below (see Fig. 5).

The priority of the HARQ-ACK may be determined on the basis of at least one of a priority directly configured on the HARQ-ACK, a priority configured on a PUCCH for HARQ-ACK transmission, a priority configured on DL transmission (for example, a PDSCH) corresponding to the HARQ-ACK, and a priority configured on a HARQ-ACK codebook including the HARQ-ACK.

### <Option 1-0>

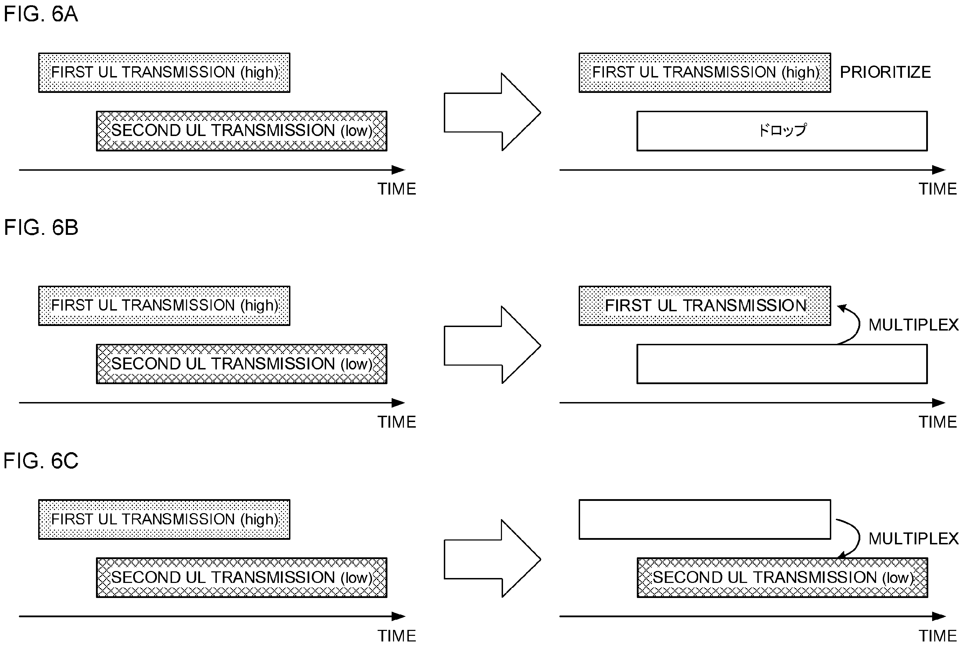

The UE makes control such that a first HARQ-ACK corresponding to a first priority (for example, high) is transmitted and a second HARQ-ACK corresponding to a second priority (for example, low) is not transmitted (for example, is dropped) (see Fig. 6A). In the following description, the first HARQ-ACK may be read as a first codebook including the first HARQ-ACK. Further, the second HARQ-ACK may be read as a second codebook including the second HARQ-ACK.

The UE may control the transmission of the first HARQ-ACK by using a resource configured for the first HARQ-ACK (for example, a first PUCCH resource). The PUCCH resource may be determined based on at least one of DCI and higher layer signaling. For example, one or more PUCCH resource sets/PUCCH resources (for example, PUCCH resource candidates) may be configured by higher layer signaling regarding a PUCCH configuration, and a specific PUCCH resource may be indicated by DCI.

Thereby, UL transmission with a first priority (high) of high priority can be prioritized and transmitted, and the transmission processing of the UE can be simplified.

### [Option 1-1]

The UE makes control such that both a first HARQ-ACK corresponding to a first priority (for example, high) and a second HARQ-ACK corresponding to a second priority (for example, low) are transmitted. The UE may control the transmission processing (for example, mapping/multiplexing) of the first HARQ-ACK and the second HARQ-ACK by using a first resource configured for the first HARQ-ACK (for example, a first PUCCH resource) (see Fig. 6B).

Further, the UE may determine the first PUCCH resource by taking account of the bits of the first HARQ-ACK or the total bits of the first HARQ-ACK and the second HARQ-ACK. For example, in a case where a plurality of PUCCH resource sets are configured for the first HARQ-ACK, the UE selects a specific PUCCH resource set on the basis of the bits of the first HARQ-ACK or the total bits of the first HARQ-ACK and the second HARQ-ACK. Then, the UE may determine a specific PUCCH resource from one or more PUCCH resources (or PUCCH resource candidates) included in the specific PUCCH resource set on the basis of information indicated by DCI (for example, PUCCH resource indication).

The first HARQ-ACK and the second HARQ-ACK may be transmitted by using different HARQ-ACK codebooks. Alternatively, the first HARQ-ACK and the second HARQ-ACK may be transmitted by using the same HARQ-ACK codebook.

Thereby, not only UL transmission with high priority but also UL transmission with low priority can be transmitted, and therefore the latency can be reduced. Further, in a case where a PUCCH resource or the like is configured taking account of priority, the degradation in communication quality can be suppressed by using a PUCCH with high priority.

### [Option 1-2]

The UE makes control such that both a first HARQ-ACK corresponding to a first priority (for example, high) and a second HARQ-ACK corresponding to a second priority (for example, low) are transmitted. The UE may control the transmission processing of the first HARQ-ACK and the second HARQ-ACK by using a second resource configured for the second HARQ-ACK (for example, a second PUCCH resource) (see Fig. 6C).

Further, the UE may determine the second PUCCH resource by taking account of the bits of the second HARQ-ACK or the total bits of the first HARQ-ACK and the second HARQ-ACK. For example, in a case where a plurality of PUCCH resource sets are configured for the second HARQ-ACK, the UE selects a specific PUCCH resource set on the basis of the bits of the second HARQ-ACK or the total bits of the first HARQ-ACK and the second HARQ-ACK. Then, the UE may determine a specific PUCCH resource from one or more PUCCH resources (or PUCCH resource candidates) included in the specific PUCCH resource set on the basis of information indicated by DCI (for example, PUCCH resource indication).

The first HARQ-ACK and the second HARQ-ACK may be transmitted by using different HARQ-ACK codebooks. Alternatively, the first HARQ-ACK and the second HARQ-ACK may be transmitted by using the same HARQ-ACK codebook.

Thereby, not only UL transmission with high priority but also UL transmission with low priority can be transmitted, and therefore the latency can be reduced.

### [Option 1-3]

The UE makes control such that both a first HARQ-ACK corresponding to a first priority (for example, high) and a second HARQ-ACK corresponding to a second priority (for example, low) are transmitted. The UE may select a suitable resource by taking account of a given condition from a first resource configured for the first HARQ-ACK (for example, a first PUCCH resource) and a second resource configured for the second HARQ-ACK (for example, a second PUCCH resource).

The given condition may be the total bit size (or total size, capacity) of UCI transmitted (for example, the first HARQ-ACK + the second

### HARQ-ACK).

For example, the UE may take account of the total bits of the first HARQ-ACK and the second HARQ-ACK to judge which of the first PUCCH resource (or a first PUCCH resource set) corresponding to the first HARQ-ACK and the second PUCCH resource (or a second PUCCH resource set) corresponding to the second HARQ-ACK to use. Specifically, the UE may select, from the first PUCCH resource set and the second PUCCH resource set, a PUCCH resource set (or a PUCCH configuration including a PUCCH resource set) having a size capable of transmitting (or accommodating) the total bits.

In a case where both the first PUCCH resource set and the second PUCCH resource set satisfy the given condition, either one PUCCH resource set (for example, a PUCCH resource set corresponding to a HARQ-ACK with high priority) may be selected.

Thereby, not only UL transmission with high priority but also UL transmission with low priority can be transmitted, and therefore the latency can be reduced. Further, an appropriate resource can be selected taking account of the bit size transmitted.

### [Variations]

In a case where both a first HARQ-ACK and a second HARQ-ACK are transmitted by using a given PUCCH resource (for example, options 1-1 to 1-3), the UE may make control such that only a part (for example, X bits) is transmitted/multiplexed/mapped for the second HARQ-ACK with low priority. X may be configured on the basis of at least one of higher layer signaling and DCI, or may be defined in specifications. Alternatively, X may be determined on the basis of the size of the PUCCH resource used for transmission (for example, at least one of the number of resource elements, the number of symbols, and the number of PRBs).

In a case where both a first HARQ-ACK and a second HARQ-ACK are transmitted by using a given PUCCH resource (for example, options 1-1 to 1-3), the given PUCCH resource may be indicated from the base station. For example, a PUCCH resource indicated by DCI (DCI corresponding to the first HARQ-ACK or the second HARQ-ACK) last received by the UE in the time domain may be used for transmission.

Alternatively, the UE may use a third PUCCH resource different from the first PUCCH resource configured for the first HARQ-ACK and the second PUCCH resource configured for the second HARQ-ACK. The third PUCCH resource may be defined in specifications, or may be notified/configured from the base station to the UE by using at least one of higher layer signaling and DCI.

### <Collision between a HARQ-ACK and an SR>

In a case where a HARQ-ACK and an SR with different priorities overlap in the time domain, the UE may control UL transmission on the basis of at least one of option 2-0 to option 2-3 below (see Fig. 5).

The priority of the SR may be determined on the basis of at least one of a priority directly configured on the SR and a priority configured on a PUCCH for SR transmission. Further, in the following description, a case where PF0 or PF1 is used as a PUCCH format (PF) used for SR transmission is given as an example; however, the present invention is not limited thereto. PF0 may be composed of one or two symbols, and PF1 may be composed of four or more symbols.

In a case where an SR (or an SR + other UCI) is transmitted by using PF0, the transmission may be controlled in accordance with the type of the SR (a positive SR or a negative SR) by using a cyclic shift applied to PF0. The positive SR corresponds to an SR type used to indicate that UL data (for example, a UL-SCH resource) is requested. The negative SR corresponds to an SR type used to indicate that a UL-SCH resource is not requested.

In a case where an SR (or an SR + other UCI) is transmitted by using PF1, a PUCCH resource used for transmission (for example, to which UCI is allocated) may be controlled on the basis of the type of the SR (a positive SR or a negative SR). In a case where the SR (for example, all SRs) is negative, the UE may use a PUCCH resource for UCI, and in a case where the SR (for example, at least one SR or all SRs) is positive, the UE may use a PUCCH resource for SR corresponding to the positive SR.

### [Option 2-0]

The UE makes control such that a first UL transmission corresponding to a first priority (for example, high) is transmitted and a second UL transmission corresponding to a second priority (for example, low) is not transmitted (for example, is dropped). Option 2-0 can be applied to a case where any one of PF0 to PF4 is used as a PUCCH resource for HARQ-ACK, and PF0 or PF1 is used as a PUCCH resource for SR.

In a case where the HARQ-ACK corresponds to a first priority (or a first UL transmission) and the SR corresponds to a second priority (or a second UL transmission), the UE may transmit the HARQ-ACK by using a resource (for example, a PUCCH resource) for HARQ-ACK. In a case where the SR corresponds to a first priority (or a first UL transmission) and the HARQ-ACK corresponds to a second priority (or a second UL transmission), the UE may transmit the SR by using a resource (for example, a PUCCH resource) for SR.

The PUCCH resource may be determined based on at least one of DCI and higher layer signaling. For example, one or more PUCCH resource sets/PUCCH resources (for example, PUCCH resource candidates) may be configured by higher layer signaling regarding a PUCCH configuration, and a specific PUCCH resource may be indicated by DCI.

Thereby, UL transmission with a first priority (high) of high priority can be prioritized and transmitted, and the transmission processing of the UE can be simplified.

### [Option 2-1]

The UE makes control such that both a first UL transmission corresponding to a first priority (for example, high) and a second UL transmission corresponding to a second priority (for example, low) (herein, a HARQ-ACK and an SR) are transmitted by using a resource for HARQ-ACK. Option 2-1 can be applied to a case where any one of PF0 to PF4 is used as a PUCCH resource for HARQ-ACK, and PF0 or PF1 is used as a PUCCH resource for SR.

The UE may control the transmission processing (for example, mapping/multiplexing) of the HARQ-ACK and the SR by using a first resource configured for HARQ-ACK (for example, a first PUCCH resource). In this case, the UE may control transmission processing by using a PUCCH resource for HARQ-ACK regardless of the priority of the HARQ-ACK or the priority of the SR. Alternatively, the UE may control transmission processing by using a PUCCH resource for HARQ-ACK in a case where the priority of the HARQ-ACK is higher than the priority of the SR.

Further, the UE may determine the first PUCCH resource by taking account of the bits of the HARQ-ACK or the total bits of the HARQ-ACK and the SR. For example, in a case where a plurality of PUCCH resource sets are configured for HARQ-ACK, the UE selects a specific PUCCH resource set on the basis of the bits of the HARQ-ACK or the total bits of the HARQ-ACK and the SR. Then, the UE may determine a specific PUCCH resource from one or more PUCCH resources (or PUCCH resource candidates) included in the specific PUCCH resource set on the basis of information indicated by DCI (for example, PUCCH resource indication).

Thereby, not only UL transmission with high priority but also UL transmission with low priority can be transmitted, and therefore the latency can be reduced. Further, a larger number of PUCCH formats (for example, PF0 to PF4) can be applied by using a PUCCH resource for HARQ-ACK or the like. Thereby, UL transmission can be appropriately performed even in a case where the number of bits of UCI transmitted is large.

### [Option 2-2]

The UE makes control such that both a first UL transmission corresponding to a first priority (for example, high) and a second UL transmission corresponding to a second priority (for example, low) (herein, a HARQ-ACK and an SR) are transmitted by using a resource for SR. Option 2-2 can be applied to a case where any one of PF0 to PF4 is used as a PUCCH resource for HARQ-ACK, and PF0 or PF1 is used as a PUCCH resource for SR.

The UE may control the transmission processing (for example, mapping/multiplexing) of the HARQ-ACK and the SR by using a second resource configured for SR (for example, a second PUCCH resource). In this case, the UE may control transmission processing by using a PUCCH resource for SR regardless of the priority of the HARQ-ACK or the priority of the SR. Alternatively, the UE may control transmission processing by using a PUCCH resource for SR in a case where the priority of the SR is higher than the priority of the HARQ-ACK.

Thereby, not only UL transmission with high priority but also UL transmission with low priority can be transmitted, and therefore the latency can be reduced.

### [Option 2-3]

The UE makes control such that both a first UL transmission corresponding to a first priority (for example, high) and a second UL transmission corresponding to a second priority (for example, low) (herein, a HARQ-ACK and an SR) are transmitted. Option 2-3 can be suitably applied to a case where PF1 is used as a PUCCH resource for HARQ-ACK, and PF0 or PF1 is used as a PUCCH resource for SR.

The UE may judge a resource used for UL transmission on the basis of the type of the SR (for example, a positive SR or a negative SR). For example, in a case where the SR is a negative SR, the UE may transmit the HARQ-ACK by using a PUCCH resource for HARQ-ACK (for example, PF1). On the other hand, in a case where the SR is a positive SR, the UE may transmit the HARQ-ACK by using a PUCCH resource for SR (for example, PF0 or PF1).

That is, the PUCCH resource used for transmission of the HARQ-ACK and the type of the SR may be associated with each other. The base station may judge whether the SR is a negative SR or a positive SR on the basis of the PUCCH resource that has been used for transmission of the HARQ-ACK.

Thereby, not only UL transmission with high priority but also UL transmission with low priority can be transmitted, and therefore the latency can be reduced. Further, an increase in the bit size transmitted can be suppressed by implicitly notifying the SR by using the PUCCH resource used for transmission of the HARQ-ACK.

### <Collision between a HARQ-ACK and CSI >

In a case where a HARQ-ACK and CSI with different priorities overlap in the time domain, the UE may control UL transmission on the basis of at least one of option 3-0 to option 3-2 below (see Fig. 5). The CSI may be CSI transmitted by using a PUCCH. The CSI may be at least one of periodic CSI (P-CSI), semi-persistent CSI (SP-CSI), and aperiodic CSI (A-CSI) .

The priority of the CSI may be determined on the basis of at least one of a priority directly configured on the CSI and a priority configured on a PUCCH for CSI transmission. Further, in the following description, a case where PF2, PF3, or PF4 is used as a PUCCH format (PF) used for transmission of the CSI is given as an example; however, the present invention is not limited thereto. Note that the HARQ-ACK may be read as a HARQ-ACK + an SR.

### [Option 3-0]

The UE makes control such that a first UL transmission corresponding to a first priority (for example, high) is transmitted and a second UL transmission corresponding to a second priority (for example, low) is not transmitted (for example, is dropped). Option 3-0 can be applied to a case where any one of PF0 to PF4 is used as a PUCCH resource for HARQ-ACK, and any one of PF2 to PF4 is used as a PUCCH resource for CSI.

In a case where a HARQ-ACK corresponds to the first priority (or the first UL transmission) and CSI corresponds to the second priority (or the second UL transmission), the UE may transmit the HARQ-ACK by using a resource (for example, a PUCCH resource) for HARQ-ACK. In a case where CSI corresponds to the first priority (or the first UL transmission) and a HARQ-ACK corresponds to the second priority (or the second UL transmission), the UE may transmit the CSI by using a resource (for example, a PUCCH resource) for CSI.

The PUCCH resource may be determined based on at least one of DCI and higher layer signaling. For example, one or more PUCCH resource sets/PUCCH resources (for example, PUCCH resource candidates) may be configured by higher layer signaling regarding a PUCCH configuration, and a specific PUCCH resource may be indicated by DCI.

Thereby, UL transmission with a first priority (high) of high priority can be prioritized and transmitted, and the transmission processing of the UE can be simplified.

### [Option 3-1]

The UE makes control such that both a first UL transmission corresponding to a first priority (for example, high) and a second UL transmission corresponding to a second priority (for example, low) (herein, a HARQ-ACK and CSI) are transmitted by using a resource for HARQ-ACK. Option 3-1 can be applied to a case where any one of PF0 to PF4 is used as a PUCCH resource for HARQ-ACK, and any one of PF2 to PF4 is used as a PUCCH resource for CSI.

The UE may control the transmission processing (for example, mapping/multiplexing) of the HARQ-ACK and the CSI by using a first resource configured for HARQ-ACK (for example, a first PUCCH resource). In this case, the UE may control transmission processing by using a PUCCH resource for HARQ-ACK regardless of the priority of the HARQ-ACK or the priority of the CSI. Alternatively, the UE may control transmission processing by using a PUCCH resource for HARQ-ACK in a case where the priority of the HARQ-ACK is higher than the priority of the CSI.

Further, the UE may determine the first PUCCH resource by taking account of the bits of the HARQ-ACK or the total bits of the HARQ-ACK and the CSI. For example, in a case where a plurality of PUCCH resource sets are configured for HARQ-ACK, the UE selects a specific PUCCH resource set on the basis of the bits of the HARQ-ACK or the total bits of the HARQ-ACK and the CSI. Then, the UE may determine a specific PUCCH resource from one or more PUCCH resources (or PUCCH resource candidates) included in the specific PUCCH resource set on the basis of information indicated by DCI (for example, PUCCH resource indication).

Thereby, not only UL transmission with high priority but also UL transmission with low priority can be transmitted, and therefore the latency can be reduced.

### [Option 3-2]

The UE makes control such that both a first UL transmission corresponding to a first priority (for example, high) and a second UL transmission corresponding to a second priority (for example, low) (herein, a HARQ-ACK and an SR) are transmitted by using a resource for CSI. Option 3-2 can be applied to a case where any one of PF0 to PF4 is used as a PUCCH resource for HARQ-ACK, and any one of PF2 to PF4 is used as a PUCCH resource for CSI.

The UE may control the transmission processing (for example, mapping/multiplexing) of the HARQ-ACK and the CSI by using a second resource configured for CSI (for example, a second PUCCH resource). In this case, the UE may control transmission processing by using a PUCCH resource for CSI regardless of the priority of the HARQ-ACK or the priority of the CSI. Alternatively, the UE may control transmission processing by using a PUCCH resource for CSI in a case where the priority of the CSI is higher than the priority of the HARQ-ACK.

Thereby, not only UL transmission with high priority but also UL transmission with low priority can be transmitted, and therefore the latency can be reduced.

### [Variations]

In a case where given higher layer signaling is notified/configured, the UE may apply option 3-1/option 3-2. The given higher layer signaling may be a higher layer parameter regarding simultaneous transmission of a HARQ-ACK and CSI (for example, simultaneousHARQ-ACK-CSI). Alternatively, the given higher layer signaling may be a new higher layer parameter (for example, simultaneousHARQ-ACK-CSI-Ext or SimultaneousHARQ-ACK-CSI-Different-Priorities).

For example, in a case where given higher layer signaling is notified/configured, the UE may make control such that a HARQ-ACK and CSI are transmitted by using a PUCCH resource for HARQ-ACK, and in other cases (for example, in a case where higher layer signaling is not notified/configured), the UE may make control such that UL transmission with low priority is dropped. Alternatively, in other cases, one UL transmission (for example, a HARQ-ACK) may be transmitted and the other UL transmission (for example, CSI) may be dropped regardless of priority.

### <Collision between an SR and an SR>

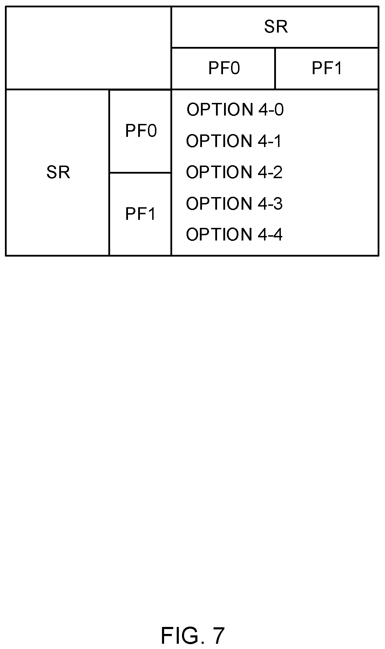

In a case where a first UL transmission (an SR) and a second UL transmission (an SR) with different priorities overlap in the time domain, the UE may control UL transmission on the basis of at least one of option 4-0 to option 4-4 below (see Fig. 7).

### [Option 4-0]

The UE makes control such that a first SR corresponding to a first priority (for example, high) is transmitted and a second SR corresponding to a second priority (for example, low) is not transmitted (for example, is dropped).

The UE may control the transmission of the first SR by using a resource configured for the first SR (for example, a first PUCCH resource). The PUCCH resource may be determined based on at least one of DCI and higher layer signaling. For example, one or more PUCCH resource sets/PUCCH resources (for example, PUCCH resource candidates) may be configured by higher layer signaling regarding a PUCCH configuration, and a specific PUCCH resource may be indicated by DCI.

Thereby, UL transmission with a first priority (high) of high priority can be prioritized and transmitted, and the transmission processing of the UE can be simplified.

### [Option 4-1]

The UE may judge an SR to be transmitted on the basis of the type of the SR (a positive SR/negative SR). For example, the UE may prioritize and transmit a positive SR. In this case, the positive SR may be transmitted regardless of the priority corresponding to each SR.

The number of positive SRs transmitted may be a given number (for example, one). For example, in a case where there are a plurality of positive SRs, the UE may make control such that one positive SR is transmitted regardless of the number of positive SRs. In a case where there are a plurality of positive SRs, the UE may autonomously determine an SR to be transmitted. Alternatively, in a case where there are a plurality of positive SRs, a positive SR with high priority may be selected.

Thus, by prioritizing and transmitting a positive SR, the latency of UL transmission can be suppressed.

### [Option 4-2]

The UE makes control such that both a first positive SR corresponding to a first priority (for example, high) and a second positive SR corresponding to a second priority (for example, low) are transmitted by using a resource for the first positive SR. That is, the UE may transmit both positive SRs in a case where a plurality of positive SRs with different priorities collide in the time domain. In a case where one SR is a negative SR, the negative SR may be dropped, or may be transmitted together with a positive SR.

Thereby, not only UL transmission with high priority but also UL transmission with low priority can be transmitted, and therefore the latency can be reduced. Further, in a case where a PUCCH resource or the like is configured taking account of priority, the degradation in communication quality can be suppressed by using a PUCCH with high priority.

### [Option 4-3]

The UE makes control such that both a first positive SR corresponding to a first priority (for example, high) and a second positive SR corresponding to a second priority (for example, low) are transmitted by using a resource for the second positive SR. That is, the UE may transmit both positive SRs in a case where a plurality of positive SRs with different priorities collide in the time domain. In a case where one SR is a negative SR, the negative SR may be dropped, or may be transmitted together with a positive SR.

Thereby, not only UL transmission with high priority but also UL transmission with low priority can be transmitted, and therefore the latency can be reduced.

### [Option 4-4]

In a case where a first positive SR corresponding to a first priority (for example, high) and a second positive SR corresponding to a second priority (for example, low) overlap in the time domain, the UE may control UL transmission on the basis of a PUCCH format for each SR.

For example, in a case where one of the PUCCH format for the first positive SR and the PUCCH format for the second positive SR is PF0, the UE may transmit both the first positive SR and the second positive SR by using PF1.

On the other hand, in a case where both the PUCCH format for the first positive SR and the PUCCH format for the second positive SR are PF1, the UE may apply option 4-1.

### <Collision between an SR and CSI>

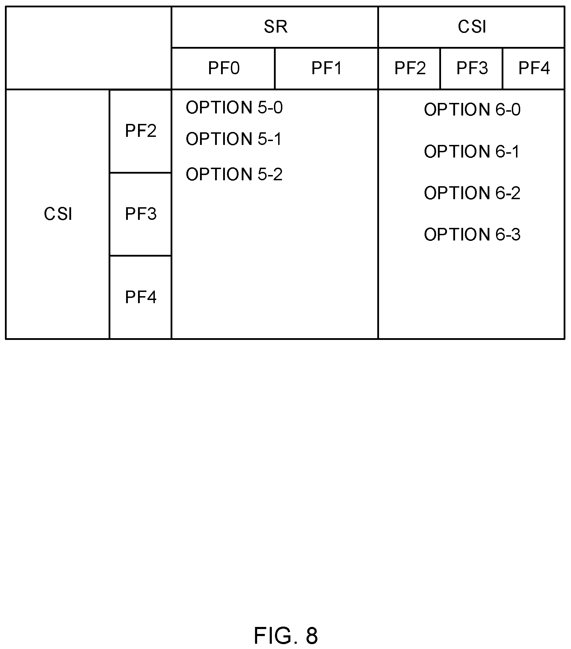

In a case where an SR and CSI with different priorities overlap in the time domain, the UE may control UL transmission on the basis of at least one of option 5-0 to option 5-2 below. The CSI may be CSI transmitted by using a PUCCH. The CSI may be at least one of periodic CSI (P-CSI), semi-persistent CSI (SP-CSI), and aperiodic CSI (A-CSI) (see Fig. 8) .

### [Option 5-0]

The UE makes control such that a first UL transmission corresponding to a first priority (for example, high) is transmitted and a second UL transmission corresponding to a second priority (for example, low) is not transmitted (for example, is dropped). Option 5-0 can be applied to a case where either one of PF1 and PF2 is used as a PUCCH resource for SR, and any one of PF2 to PF4 is used as a PUCCH resource for

### CSI.

In a case where an SR corresponds to the first priority (or the first UL transmission) and CSI corresponds to the second priority (or the second UL transmission), the UE may transmit a HARQ-ACK by using a resource (for example, a PUCCH resource) for SR. In a case where CSI corresponds to the first priority (or the first UL transmission) and an SR corresponds to the second priority (or the second UL transmission), the UE may transmit the CSI by using a resource (for example, a PUCCH resource) for CSI.

Thereby, UL transmission with a first priority (high) of high priority can be prioritized and transmitted, and the transmission processing of the UE can be simplified.

### [Option 5-1]

The UE makes control such that both a first UL transmission corresponding to a first priority (for example, high) and a second UL transmission corresponding to a second priority (for example, low) (herein, an SR and CSI) are transmitted by using a resources for CSI. Option 5-1 can be applied to a case where either one of PF0 and PF1 is used as a PUCCH resource for SR, and any one of PF2 to PF4 is used as a PUCCH resource for

### CSI.

The UE may control the transmission processing (for example, mapping/multiplexing) of the SR and the CSI by using a first resource configured for CSI (for example, a first PUCCH resource). In this case, the UE may control transmission processing by using a PUCCH resource for CSI regardless of the priority of the CSI or the priority of the SR. Alternatively, the UE may control transmission processing by using a PUCCH resource for CSI in a case where the priority of the CSI is higher than the priority of the SR.

Thereby, not only UL transmission with high priority but also UL transmission with low priority can be transmitted, and therefore the latency can be reduced.

### [Option 5-2]

The UE makes control such that both a first UL transmission corresponding to a first priority (for example, high) and a second UL transmission corresponding to a second priority (for example, low) (herein, a HARQ-ACK and an SR) are transmitted by using a resource for SR. Option 5-2 can be applied to a case where either one of PF0 and PF1 is used as a PUCCH resource for SR, and any one of PF2 to PF4 is used as a PUCCH resource for CSI.

The UE may control the transmission processing (for example, mapping/multiplexing) of the SR and the CSI by using a second resource configured for SR (for example, a second PUCCH resource). In this case, the UE may control transmission processing by using a PUCCH resource for CSI regardless of the priority of the SR or the priority of the CSI. Alternatively, the UE may control transmission processing by using a PUCCH resource for SR in a case where the priority of the SR is higher than the priority of the CSI.

Thereby, not only UL transmission with high priority but also UL transmission with low priority can be transmitted, and therefore the latency can be reduced.

### <Collision between CSI and CSI>

In a case where a first UL transmission (CSI) and a second UL transmission (CSI) with different priorities overlap in the time domain, the UE may control UL transmission on the basis of at least one of option 6-0 to option 6-3 below (see Fig 8).

The CSI may be CSI transmitted by using a PUCCH. The CSI may be at least one of periodic CSI (P-CSI), semi-persistent CSI (SP-CSI), and aperiodic CSI (A-CSI).

### [Option 6-0]

The UE makes control such that a first piece of CSI corresponding to a first priority (for example, high) is transmitted and a second piece of CSI corresponding to a second priority (for example, low) is not transmitted (for example, is dropped).

The UE may control the transmission of the first piece of CSI by using a resource configured for the first piece of CSI (for example, a first PUCCH resource). The PUCCH resource may be determined based on at least one of DCI and higher layer signaling. For example, one or more PUCCH resource sets/PUCCH resources (for example, PUCCH resource candidates) may be configured by higher layer signaling regarding a PUCCH configuration, and a specific PUCCH resource may be indicated by DCI.

Thereby, UL transmission with a first priority (high) of high priority can be prioritized and transmitted, and the transmission processing of the UE can be simplified.

### [Option 6-1]

The UE makes control such that both a first piece of CSI corresponding to a first priority (for example, high) and a second piece of CSI corresponding to a second priority (for example, low) are transmitted. The UE may control the transmission processing (for example, mapping/multiplexing) of the first piece of CSI and the second piece of CSI by using a first resource configured for the first piece of CSI (for example, a first PUCCH resource).

Further, the UE may determine the first PUCCH resource by taking account of the bits of the first piece of CSI or the total bits of the first piece of CSI and the second piece of CSI. For example, in a case where a plurality of PUCCH resource sets are configured for the first piece of CSI, the UE selects a specific PUCCH resource set on the basis of the bits of the first piece of CSI or the total bits of the first piece of CSI and the second piece of CSI. Then, the UE may determine a specific PUCCH resource from one or more PUCCH resources (or PUCCH resource candidates) included in the specific PUCCH resource set on the basis of information indicated by DCI (for example, PUCCH resource indication).

Thereby, not only UL transmission with high priority but also UL transmission with low priority can be transmitted, and therefore the latency can be reduced. Further, in a case where a PUCCH resource or the like is configured taking account of priority, the degradation in communication quality can be suppressed by using a PUCCH with high priority.

### [Option 6-2]

The UE makes control such that both a first piece of CSI corresponding to a first priority (for example, high) and a second piece of CSI corresponding to a second priority (for example, low) are transmitted. The UE may control the transmission processing of the first piece of CSI and the second piece of CSI by using a second resource configured for the second piece of CSI (for example, a second PUCCH resource).

Further, the UE may determine the second PUCCH resource by taking account of the bits of the second piece of CSI or the total bits of the first piece of CSI and the second piece of CSI. For example, in a case where a plurality of PUCCH resource sets are configured for the second piece of CSI, the UE selects a specific PUCCH resource set on the basis of the bits of the second piece of CSI or the total bits of the first piece of CSI and the second piece of CSI. Then, the UE may determine a specific PUCCH resource from one or more PUCCH resources (or PUCCH resource candidates) included in the specific PUCCH resource set on the basis of information indicated by DCI (for example, PUCCH resource indication).

Thereby, not only UL transmission with high priority but also UL transmission with low priority can be transmitted, and therefore the latency can be reduced.

### [Option 6-3]

In a case where both a first piece of CSI corresponding to a first priority (for example, high) and a second piece of CSI corresponding to a second priority (for example, low) are transmitted, the UE may use a third resource different from a first resource for the first piece of CSI or a second resource for the second piece of CSI. The third resource (for example, a third PUCCH resource) may be a PUCCH resource configured for a plurality of CSI transmissions.

The third PUCCH resource may be notified/configured from the base station to the UE by using given higher layer signaling (for example, multi-CSI-PUCCH-ResourceList). The UE may apply the third PUCCH resource in a case where the given higher layer signaling is notified/configured and it is intended to transmit both the first piece of CSI and the second piece of CSI.

### [Variations]

In a case where given higher layer signaling is notified/configured, the UE may apply option 6-3 (or option 6-1/6-2). The given higher layer signaling may be a higher layer parameter regarding a PUCCH resource list used for transmission of a plurality of pieces of CSI (for example, multi-CSI-PUCCH-ResourceList). Alternatively, the given higher layer signaling may be a new higher layer parameter (for example, multi-CSI-PUCCH-ResourceList-Ext or multi-CSI-PUCCH-ResourceList-Different-Priorities) .

For example, the UE assumes a case where a PUCCH resource list including J or fewer PUCCH resources is notified/configured as a PUCCH resource for a plurality of CSI transmissions by given higher layer signaling. For example, J = 2 is possible. Alternatively, J may be 1, or 3 or more.

In this case, the UE may select/determine a given number of PUCCH resources (for example, one PUCCH resource) from among J PUCCH resources, and may transmit a plurality of pieces of CSI by using the given number of PUCCH resources. In a case where the coding rate of CSI transmitted by using a PUCCH resource exceeds a given value/a maximum value, control may be made such that some pieces of CSI are not transmitted (for example, are dropped). The pieces of CSI to be dropped may be determined on the basis of the priority of each piece of CSI. For example, some or all pieces of CSI with low priority may be dropped.

On the other hand, in a case where a given higher layer parameter is not notified/configured, the UE may drop pieces of CSI other than pieces of CSI with high priority.

Thus, by configuring and using a PUCCH resource for a plurality of pieces of CSI, UL transmission can be appropriately performed even in a case where the bit size (or capacity) of CSI is large.

### <Collision between a PUSCH and a HARQ-ACK/SR/CSI>

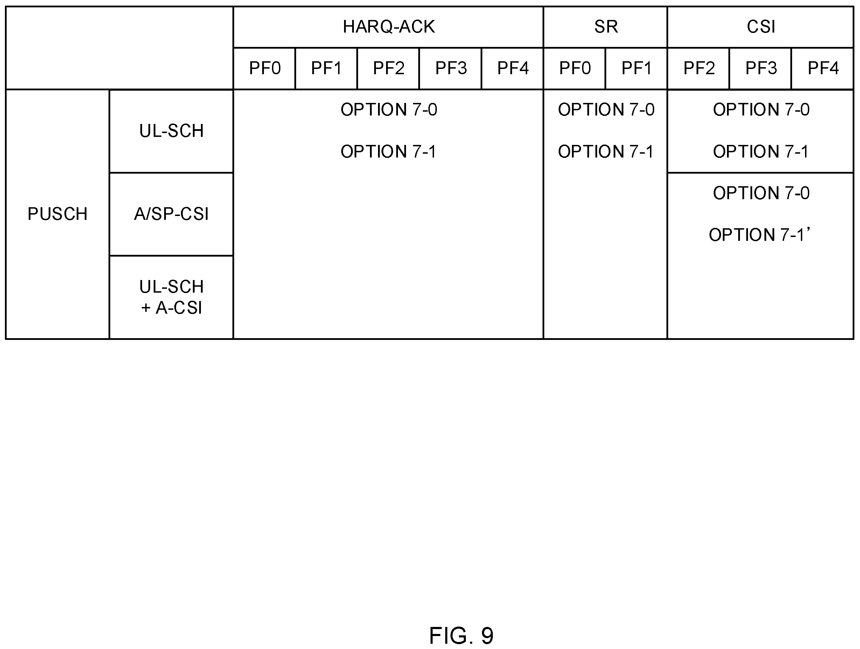

In a case where a PUSCH and UCI (for example, a HARQ-ACK/SR/CSI) with different priorities overlap in the time domain, the UE may control UL transmission on the basis of at least one of option 7-0 and option 7-1 below (see Fig. 9).

At least one of UL data (for example, UL0SCH) and CSI may be mapped/multiplexed on the PUSCH. The CSI may be at least one of semi-persistent CSI (SP-CSI) and aperiodic CSI (A-CSI).

The priority of the PUSCH may be determined on the basis of at least one of a priority directly configured on the PUSCH, a priority configured on UL data (for example, a UL-SCH), and a priority configured on CSI.

### [Option 7-0]

The UE makes control such that a first UL transmission corresponding to a first priority (for example, high) is transmitted and a second UL transmission corresponding to a second priority (for example, low) is not transmitted (for example, is dropped).

A case where a PUSCH (or a UL-SCH/CSI transmitted by a PUSCH) corresponds to a first priority (or a first UL transmission) and a PUCCH (or a HARQ-ACK/SR/CSI transmitted by a PUCCH) corresponds to a second priority (or a second UL transmission) is assumed. In such a case, the UE transmits a UL-SCH/CSI allocated to a PUSCH by using the PUSCH, and drops a PUCCH (or a HARQ-ACK/SR/CSI allocated to a PUCCH).

On the other hand, a case where a PUCCH corresponds to a first priority (or a first UL transmission) and a PUSCH corresponds to a second priority (or a second UL transmission) is assumed. In such a case, the UE transmits a HARQ-ACK/SR/CSI allocated to a PUCCH by using the PUCCH, and drops a PUSCH (or a UL-SCH/CSI allocated to a PUSCH).

Thereby, UL transmission with a first priority (high) of high priority can be prioritized and transmitted, and the transmission processing of the UE can be simplified.

### [Option 7-1]

The UE makes control such that both a first UL transmission corresponding to a first priority (for example, high) and a second UL transmission corresponding to a second priority (for example, low) (herein, a UL-SCH and UCI) are transmitted by using a PUSCH.

The UE may make control such that a HARQ-ACK/SR/CSI allocated to a PUCCH is transmitted (for example, mapped/multiplexed) by using a PUSCH. The UL-SCH allocated to a PUSCH and the HARQ-ACK/SR/CSI allocated to a PUCCH are mapped/multiplexed on the PUSCH.

In this case, the UE may control transmission processing by using a PUSCH regardless of the priority of the PUSCH or the priority of the PUCCH (even in a case where the priority of the PUCCH is higher than the priority of the PUSCH).

Alternatively, the UE may control transmission processing by using a PUSCH in a case where the priority of the HARQ-ACK is higher than the priority of the PUSCH. On the other hand, transmission processing may be controlled by using a PUSCH in a case where the priority of the HARQ-ACK is lower than the priority of the PUSCH.

Further, the UE may control UCI mapped/multiplexed on a PUSCH on the basis of the type of a UL signal (for example, CSI) allocated to the PUSCH (option 7-1').

For example, a case where given CSI (for example, A-CSI) is allocated to a PUSCH and P-CSI/SP-CSI is allocated to a PUCCH is assumed. In such a case, control may be made such that P-CSI/SP-CSI is not mapped on the PUSCH (or is dropped) and only A-CSI is transmitted by using the PUSCH. Thereby, an increase in the overhead of the UL signal transmitted by the PUSCH can be suppressed.

In a case where a PUCCH (UCI) and a PUSCH with different priorities overlap in the time domain, by transmitting the UCI by using the PUSCH, not only UL transmission with high priority but also UL transmission with low priority can be transmitted, and therefore the latency can be reduced. Further, even in a case where the bit size (or capacity) of UCI is large, a plurality of UL signals can be appropriately transmitted.

### <Variations>

In a case where a first UL transmission and a second UL transmission with different priorities overlap in the time domain, the UE may determine which of the above options to apply on the basis of a given condition/given information.

The given condition/given information may be at least one of a higher layer parameter and DCI notified from the base station.

For example, a case where a plurality of HARQ-ACKs with different priorities collide in the time domain is assumed. The UE may determine an option to be applied on the basis of given higher layer signaling configured from the base station (or the presence or absence of a given higher layer parameter configured). The given higher layer signaling may be, for example, simultaneousHARQ-ACK-HARQ-ACK or simultaneousHARQ-ACK-Different-Priorities. The UE may apply at least one of options 1-1 to 1-3 in a case where given higher layer signaling is notified/configured, and may apply option 1-0 otherwise.

For example, a case where a HARQ-ACK and CSI with different priorities collide in the time domain is assumed. The UE may determine an option to be applied on the basis of given higher layer signaling configured from the base station (or the presence or absence of a given higher layer parameter configured). The given higher layer signaling may be, for example, simultaneousHARQ-ACK-HARQ-CSI(existing) or simultaneousHARQ-ACK-CSI-Different-Priorities. The UE may apply at least one of options 3-1 and 3-2 in a case where given higher layer signaling is notified/configured, and may apply option 3-0 otherwise.

Note that, also for other cases, the UE may apply option X-1 or a subsequent option to a case where given higher layer signaling is notified/configured, and may apply option X-0 to a case where given higher layer signaling is not notified/configured.

Thus, a case where given higher layer signaling is configured for each collision case of UL transmissions (for example, HARQ-ACKs, a HARQ-ACK and CSI, or the like) has been described; however, the present invention is not limited thereto. For example, common higher layer signaling may be configured for a plurality of collision cases. For example, in a case where common higher layer signaling is configured, an option other than option X-0 may be selected for each collision case, and in a case where common higher layer signaling is not configured, option X-0 may be selected.

The given condition/given information may be UE capability information that the UE reports.

For example, in a case where the UE reports given UE capability information, an option other than option X-0 may be applied (or configured from the base station) to the UE in one or a plurality of collision cases. The given UE capability information may be information indicating whether or not the UE supports the capability of simultaneously transmitting a plurality of UL transmissions having different priorities and overlapping in the time domain. For example, the given UE capability information may be UL intra-UE multiplexing/prioritization of overlapping channel/signals with two priority levels in physical layer, or new UE capability to support UL intra-UE multiplexing with different priorities.

The given UE capability information may be reported for each collision case, or may be reported in common to a plurality of collision cases (for example, as one piece of UE capability information).

Alternatively, the option that the UE applies to each collision case may be defined in specifications.

Alternatively, the given condition/given information may be a combination of a higher layer parameter notified from the base station and UE capability information that the UE reports. For example, in a case where the UE reports given UE capability information and is configured with a given higher layer parameter from the base station, the UE may make control such that an option other than option X-0 is applied to one or a plurality of collision cases.

### <Determination of priority>

The UE may determine/judge the priority of a UL channel/UL signal on the basis of given information. For example, information regarding priority may be notified from the base station to the UE by using at least one of higher layer signaling and DCI.

The priority of a UL channel/UL signal may be associated with a parameter of DCI (for example, a DCI format) corresponding to the UL channel/UL signal. On the basis of a DCI format, the UE may judge the priority of a UL channel/UL signal scheduled, configured, or triggered by the DCI format. For example, "low" may be configured on a UL channel/UL signal corresponding to DCI format 0_1, and "high" may be configured on a UL channel/UL signal corresponding to DCI format 0_2.

For a specific UL channel/UL signal, priority may be defined in specifications. For example, either one of a first priority (for example, high) and a second priority (for example, low) may be applied to A-CSI transmitted by using a PUCCH (or a PUCCH that transmits A-CSI).

### (Radio Communication System)

Hereinafter, a configuration of a radio communication system according to one embodiment of the present disclosure will be described. In this radio communication system, communication is performed using any one of the radio communication methods according to the embodiments of the present disclosure or a combination thereof.

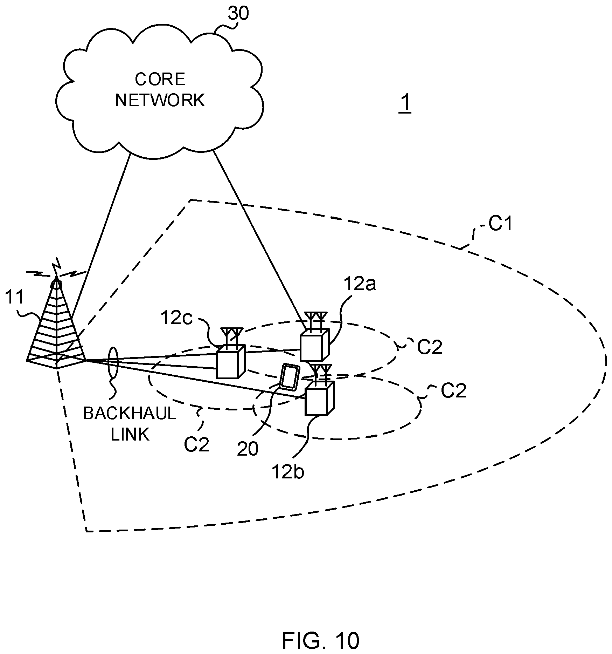

Fig. 10 is a diagram illustrating an example of a schematic configuration of the radio communication system according to one embodiment. A radio communication system 1 may be a system that implements communication using long term evolution (LTE), 5th generation mobile communication system New Radio (5G NR), and the like drafted as the specification by third generation partnership project (3GPP).

Further, the radio communication system 1 may support dual connectivity (multi-RAT dual connectivity (MR-DC)) between a plurality of radio access technologies (RATs). The MR-DC may include dual connectivity between LTE (evolved universal terrestrial radio access (E-UTRA)) and NR (E-UTRA-NR dual connectivity (EN-DC)), dual connectivity between NR and LTE (NR-E-UTRA dual connectivity (NE-DC)), and the like.

In the EN-DC, an LTE (E-UTRA) base station (eNB) is a master node (MN), and an NR base station (gNB) is a secondary node (SN). In the NE-DC, an NR base station (gNB) is the MN, and an LTE (E-UTRA) base station (eNB) is the SN.

The radio communication system 1 may support dual connectivity between a plurality of base stations in the same RAT (for example, dual connectivity in which both the MN and the SN are NR base stations (gNB) (NR-NR dual connectivity (NN-DC)).

The radio communication system 1 may include a base station 11 that forms a macro cell C1 with a relatively wide coverage, and base stations 12 (12a to 12c) that are disposed within the macro cell C1 and that form small cells C2 narrower than the macro cell C1. A user terminal 20 may be positioned in at least one cell. The arrangement, number, and the like of cells and the user terminals 20 are not limited to the aspects illustrated in the drawings. Hereinafter, the base stations 11 and 12 will be collectively referred to as "base stations 10" when the base stations 11 and 12 are not distinguished from each other.

The user terminal 20 may be connected to at least one of the plurality of base stations 10. The user terminal 20 may use at least one of carrier aggregation (CA) using a plurality of component carriers (CC) and dual connectivity (DC).

Each CC may be included in at least one of a frequency range 1 (FR1) or a second frequency range 2 (FR2). The macro cell C1 may be included in FR1, and the small cell C2 may be included in FR2. For example, FR1 may be a frequency range of 6 GHz or less (sub-6 GHz), and FR2 may be a frequency range higher than 24 GHz (above-24 GHz). Note that the frequency bands, definitions, and the like of the FR1 and FR2 are not limited thereto, and, for example, the FR1 may correspond to a frequency band higher than the FR2.

Further, the user terminal 20 may perform communication in each CC using at least one of time division duplex (TDD) or frequency division duplex (FDD).

The plurality of base stations 10 may be connected by wire (e.g., an optical fiber or an X2 interface in compliance with common public radio interface (CPRI)) or wirelessly (e.g., NR communication). For example, when NR communication is used as a backhaul between the base stations 11 and 12, the base station 11 corresponding to a higher-level station may be referred to as an integrated access backhaul (IAB) donor, and the base station 12 corresponding to a relay station (relay) may be referred to as an IAB node.

The base station 10 may be connected to a core network 30 via another base station 10 or directly. The core network 30 may include, for example, at least one of an evolved packet core (EPC), a 5G core network (5GCN), or a next generation core (NGC).

The user terminal 20 may a terminal that corresponds to at least one of communication methods such as LTE, LTE-A, and 5G.

In the radio communication system 1, a radio access method based on orthogonal frequency division multiplexing (OFDM) may be used. For example, in at least one of downlink (DL) or uplink (UL), cyclic prefix OFDM (CP-OFDM), discrete Fourier transform spread OFDM (DFT-s-OFDM), orthogonal frequency division multiple access (OFDMA), single carrier frequency division multiple access (SC-FDMA), and the like may be used.

The radio access method may be referred to as a waveform. Note that in the radio communication system 1, another radio access method (for example, another single carrier transmission method or another multicarrier transmission method) may be used as the UL and DL radio access method.

In the radio communication system 1, as a downlink channel, a physical downlink shared channel (PDSCH), a physical broadcast channel (PBCH), a physical downlink control channel (PDCCH), or the like shared by the user terminals 20 may be used.

Further, in the radio communication system 1, as an uplink channel, a physical uplink shared channel (PUSCH), a physical uplink control channel (PUCCH), a physical random access channel (PRACH), or the like shared by the user terminals 20 may be used.

User data, higher layer control information, a system information block (SIB), and the like are transmitted on the PDSCH. The PUSCH may transmit the user data, higher layer control information, and the like. Furthermore, a master information block (MIB) may be transmitted on the PBCH.

Lower layer control information may be transmitted on the PDCCH. The lower layer control information may include, for example, downlink control information (DCI) including scheduling information of at least one of the PDSCH or the PUSCH.

Note that the DCI that schedules the PDSCH may be referred to as DL assignment, DL DCI, or the like, and the DCI that schedules PUSCH may be referred to as UL grant, UL DCI, or the like. Note that the PDSCH may be replaced with DL data, and the PUSCH may be replaced with UL data.

For detection of the PDCCH, a control resource set (CORESET) and a search space may be used. The CORESET corresponds to a resource that searches for DCI. The search space corresponds to a search area and a search method for PDCCH candidates. One CORESET may be associated with one or more search spaces. The UE may monitor the CORESET associated with a given search space based on search space configuration.

One search space may correspond to a PDCCH candidate corresponding to one or more aggregation levels. One or more search spaces may be referred to as a search space set. Note that "search space" and "search space set", "search space configuration" and "search space set configuration", and "CORESET" and "CORESET configuration", and the like in the present disclosure may be replaced with each other.

Uplink control information (UCI) including at least one of channel state information (CSI), delivery acknowledgement information (which may be referred to as, for example, hybrid automatic repeat request acknowledgement (HARQ-ACK), ACK/NACK, or the like), or scheduling request (SR) may be transmitted on the PUCCH. A random access preamble for establishing connection with a cell may be transmitted on the PRACH.

Note that in the present disclosure, downlink, uplink, and the like may be expressed without "link". Various channels may be expressed without adding "physical" at the beginning thereof.

In the radio communication system 1, a synchronization signal (SS), a downlink reference signal (DL-RS), and the like may be transmitted. In the radio communication system 1, a cell-specific reference signal (CRS), a channel state information reference signal (CSI-RS), a demodulation reference signal (DMRS), a positioning reference signal (PRS), a phase tracking reference signal (PTRS), or the like may be transmitted as the DL-RS.

The synchronization signal may be, for example, at least one of a primary synchronization signal (PSS) or a secondary synchronization signal (SSS). A signal block including the SS (PSS or SSS) and the PBCH (and the DMRS for the PBCH) may be referred to as an SS/PBCH block, an SS block (SSB), or the like. Note that, the SS, the SSB, or the like may also be referred to as a reference signal.

Furthermore, in the radio communication system 1, a measurement reference signal (sounding reference signal (SRS)), a demodulation reference signal (DMRS), or the like may be transmitted as an uplink reference signal (UL-RS). Note that, DMRSs may be referred to as "user terminal-specific reference signals (UE-specific Reference Signals)."

### (Base Station)

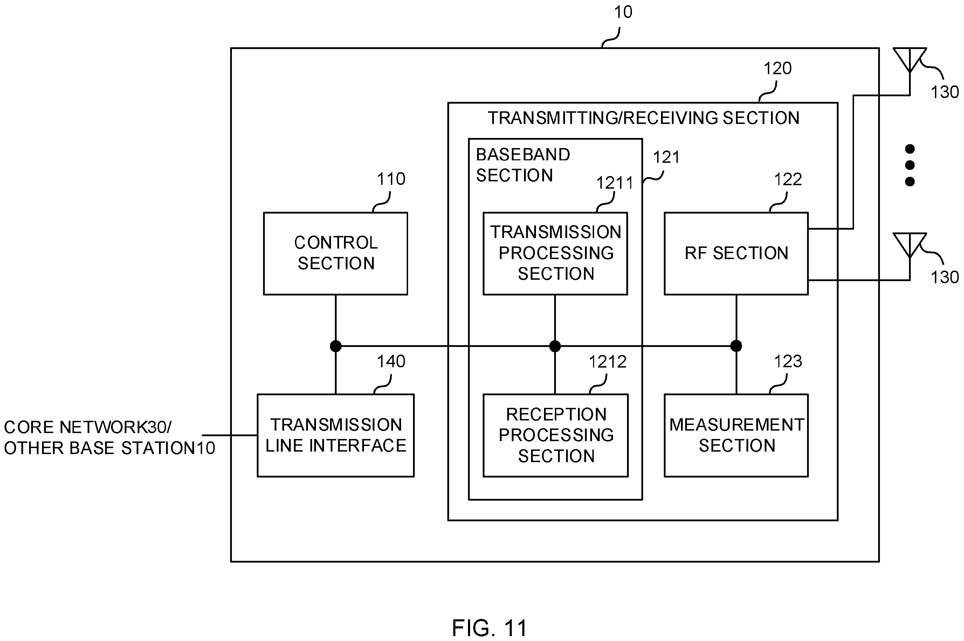

Fig. 11 is a diagram illustrating an example of a configuration of the base station according to one embodiment. The base station 10 includes a control section 110, a transmitting/receiving section 120, a transmission/reception antenna 130, and a transmission line interface 140. Note that one or more control sections 110, one or more transmitting/receiving sections 120, one or more transmission/reception antennas 130, and one or more transmission line interfaces 140 may be included.

Note that this example mainly describes a functional block which is a characteristic part of the present embodiment, and it may be assumed that the base station 10 also has another functional block necessary for radio communication. A part of processing of each section described below may be omitted.

The control section 110 controls the entire base station 10. The control section 110 can be implemented by a controller, a control circuit, and the like that are described based on common recognition in the technical field related to the present disclosure.

The control section 110 may control signal generation, scheduling (for example, resource allocation or mapping), and the like. The control section 110 may control transmission/reception, measurement, and the like using the transmitting/receiving section 120, the transmission/reception antenna 130, and the transmission line interface 140. The control section 110 may generate data to be transmitted as a signal, control information, a sequence, and the like, and may forward the data, the control information, the sequence, and the like to the transmitting/receiving section 120. The control section 110 may perform call processing (such as configuration or releasing) of a communication channel, management of the state of the base station 10, and management of a radio resource.

The transmitting/receiving section 120 may include a baseband section 121, a radio frequency (RF) section 122, and a measurement section 123. The baseband section 121 may include a transmission processing section 1211 and a reception processing section 1212. The transmitting/receiving section 120 can include a transmitter/receiver, an RF circuit, a baseband circuit, a filter, a phase shifter, a measurement circuit, a transmission/reception circuit, and the like that are described on the basis of common recognition in the technical field related to the present disclosure.

The transmitting/receiving section 120 may be configured as an integrated transmitting/receiving section, or may be configured by a transmitting section and a receiving section. The transmitting section may include the transmission processing section 1211 and the RF section 122. The receiving section may be implemented by the reception processing section 1212, the RF section 122, and the measurement section 123.

The transmission/reception antennas 130 can be implemented by antennas described based on common recognition in the technical field related to the present disclosure, for example, an array antenna.

The transmitting/receiving section 120 may transmit the above-described downlink channel, synchronization signal, downlink reference signal, and the like. The transmitting/receiving section 120 may receive the above-described uplink channel, uplink reference signal, and the like.

The transmitting/receiving section 120 may form at least one of a Tx beam or a reception beam by using digital beam forming (for example, precoding), analog beam forming (for example, phase rotation), and the like.

The transmitting/receiving section 120 (transmission processing section 1211) may perform packet data convergence protocol (PDCP) layer processing, radio link control (RLC) layer processing (for example, RLC retransmission control), medium access control (MAC) layer processing (for example, HARQ retransmission control), and the like on, for example, data, control information, and the like acquired from the control section 110, to generate a bit string to be transmitted.

The transmitting/receiving section 120 (transmission processing section 1211) may perform transmission processing such as channel encoding (which may include error correcting encoding), modulation, mapping, filtering processing, discrete Fourier transform (DFT) processing (if necessary), inverse fast Fourier transform (IFFT) processing, precoding, or digital-analog conversion on the bit string to be transmitted, to output a baseband signal.

The transmitting/receiving section 120 (RF section 122) may perform modulation to a radio frequency band, filtering processing, amplification, and the like on the baseband signal, and may transmit a signal in the radio frequency band via the transmission/reception antenna 130.

Meanwhile, the transmitting/receiving section 120 (RF section 122) may perform amplification, filtering processing, demodulation to a baseband signal, and the like on the signal in the radio frequency band received by the transmission/reception antenna 130.

The transmitting/receiving section 120 (reception processing section 1212) may apply reception processing such as analog-digital conversion, fast fourier transform (FFT) processing, inverse discrete Fourier transform (IDFT) processing (if necessary), filtering processing, demapping, demodulation, decoding (which may include error correction decoding), MAC layer processing, RLC layer processing, or PDCP layer processing on the acquired baseband signal, to acquire user data and the like.

The transmitting/receiving section 120 (measurement section 123) may perform measurement on the received signal. For example, the measurement section 123 may perform radio resource management (RRM), channel state information (CSI) measurement, and the like based on the received signal. The measurement section 123 may measure received power (for example, reference signal received power (RSRP)), received quality (for example, reference signal received quality (RSRQ), a signal to interference plus noise ratio (SINR), a signal to noise ratio (SNR)), signal strength (for example, received signal strength indicator (RSSI)), propagation path information (for example, CSI), and the like. The measurement result may be output to the control section 110.

The transmission line interface 140 may transmit/receive a signal (backhaul signaling) to and from an apparatus included in the core network 30, another base stations 10, and the like, and may acquire, transmit, and the like user data (user plane data), control plane data, and the like for the user terminal 20.

Note that the transmitting section and the receiving section of the base station 10 in the present disclosure may include at least one of the transmitting/receiving section 120, the transmission/reception antenna 130, or the transmission line interface 140.

The transmitting/receiving section 120 may transmit information regarding the priority of the UL transmission.

In a case where a plurality of UL transmissions with different priorities overlap in the time domain, the control section 110 may control the reception processing of a plurality of UL transmissions in which transmission is controlled on the basis of at least one of a UL signal included in each of UL transmissions, a UL channel used for each of the UL transmissions, and a resource of an uplink control channel used for each of the UL transmissions.

### (User Terminal)

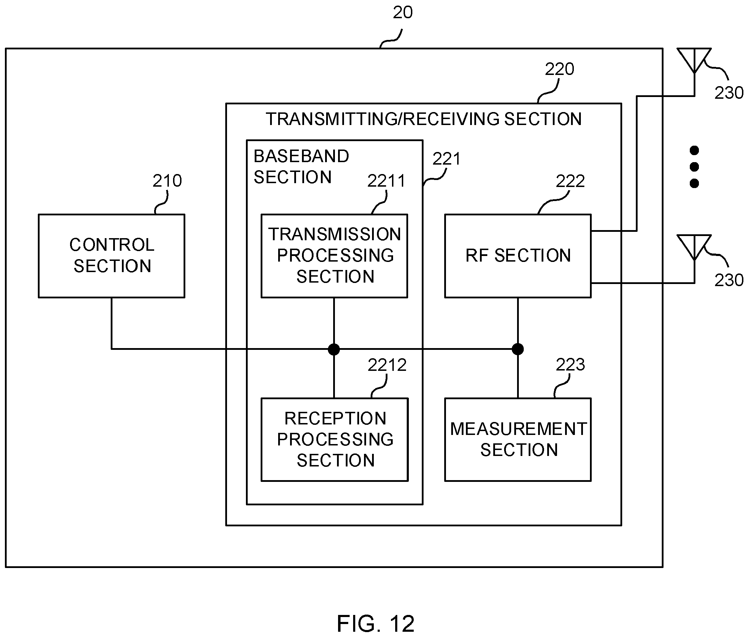

Fig. 12 is a diagram illustrating an example of a configuration of the user terminal according to one embodiment. The user terminal 20 includes a control section 210, a transmitting/receiving section 220, and a transmission/reception antenna 230. Note that one or more of the control sections 210, one or more of the transmitting/receiving sections 220, and one or more of the transmission/reception antennas 230 may be included.

Note that, although this example mainly describes functional blocks of a characteristic part of the present embodiment, it may be assumed that the user terminal 20 includes other functional blocks that are necessary for radio communication as well. A part of processing of each section described below may be omitted.

The control section 210 controls the entire user terminal 20. The control section 210 can include a controller, a control circuit, and the like that are described on the basis of common recognition in the technical field related to the present disclosure.

The control section 210 may control signal generation, mapping, and the like. The control section 210 may control transmission/reception, measurement, and the like using the transmitting/receiving section 220 and the transmission/reception antenna 230. The control section 210 may generate data, control information, a sequence, and the like to be transmitted as signals, and may forward the data, control information, sequence, and the like to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can include a transmitter/receiver, an RF circuit, a baseband circuit, a filter, a phase shifter, a measurement circuit, a transmitting/receiving circuit, and the like that are described based on common recognition in the technical field related to the present disclosure.

The transmitting/receiving section 220 may be formed as an integrated transmitting/receiving section, or may include a transmitting section and a receiving section. The transmitting section may include the transmission processing section 2211 and the RF section 222. The receiving section may include the reception processing section 2212, the RF section 222, and the measurement section 223.

The transmission/reception antenna 230 can include an antenna described on the basis of common recognition in the technical field related to the present disclosure, for example, an array antenna.

The transmitting/receiving section 220 may receive the above-described downlink channel, synchronization signal, downlink reference signal, and the like. The transmitting/receiving section 220 may transmit the above-described uplink channel, uplink reference signal, and the like.

The transmitting/receiving section 220 may form at least one of a Tx beam or a reception beam by using digital beam forming (for example, precoding), analog beam forming (for example, phase rotation), and the like.

The transmitting/receiving section 220 (transmission processing section 2211) may perform PDCP layer processing, RLC layer processing (for example, RLC retransmission control), MAC layer processing (for example, HARQ retransmission control), and the like on, for example, data, control information, and the like acquired from the control section 210, to generate a bit string to be transmitted.

The transmitting/receiving section 220 (transmission processing section 2211) may perform transmission processing such as channel encoding (which may include error correcting encoding), modulation, mapping, filtering processing, DFT processing (if necessary), IFFT processing, precoding, or digital-analog conversion on the bit string to be transmitted, to output a baseband signal.

Note that whether or not to apply DFT processing may be determined based on configuration of transform precoding. In a case where transform precoding is enabled for a given channel (e.g., PUSCH), the transmitting/receiving section 220 (transmission processing section 2211) may perform DFT processing as the transmission processing in order to transmit the channel using a DFT-s-OFDM waveform. In a case where it is not the case, DFT processing need not be performed as the transmission processing.

The transmitting/receiving section 220 (RF section 222) may perform modulation to a radio frequency band, filtering processing, amplification, and the like on the baseband signal, to transmit a signal in the radio frequency band via the transmission/reception antenna 230.

Meanwhile, the transmitting/receiving section 220 (RF section 222) may perform amplification, filtering processing, demodulation to a baseband signal, and the like on the signal in the radio frequency band received by the transmission/reception antenna 230.

The transmitting/receiving section 220 (reception processing section 2212) may apply reception processing such as analog-digital conversion, FFT processing, IDFT processing (if necessary), filtering processing, demapping, demodulation, decoding (which may include error correction decoding), MAC layer processing, RLC layer processing, or PDCP layer processing on the acquired baseband signal, to acquire user data and the like.

The transmitting/receiving section 220 (measurement section 223) may perform measurement on the received signal. For example, the measurement section 223 may perform RRM measurement, CSI measurement, and the like based on the received signal. The measurement section 223 may measure received power (for example, RSRP), received quality (for example, RSRQ, SINR, or SNR), signal strength (for example, RSSI), propagation path information (for example, CSI), and the like. The measurement result may be output to the control section 210.

Note that the transmitting section and the receiving section of the user terminal 20 in the present disclosure may include at least one of the transmitting/receiving section 220 or the transmission/reception antenna 230.

The transmitting/receiving section 220 may receive the information regarding the priority of the UL transmission.

In a case where a plurality of UL transmissions with different priorities overlap in the time domain, the control section 210 may control the transmission processing of a plurality of UL transmissions on the basis of at least one of a UL signal included in each of UL transmissions, a UL channel used for each of the UL transmissions, and a resource of an uplink control channel used for each of the UL transmissions.

The control section 210 may make control such that a plurality of UL transmissions are performed by using any one of a first resource used for UL transmission with a first priority, a second resource used for UL transmission with a second priority, and a third resource different from the first resource and the second resource.

The control section 210 may judge whether to perform simultaneous transmission of a plurality of UL transmissions with different priorities or not on the basis of at least one of information notified by higher layer signaling and terminal capability information to report.

In a case where an uplink shared channel and an uplink control channel used for transmission of uplink control information overlap in the time domain, the control section 210 may judge the transmission of the uplink control information on the basis of a UL signal transmitted by the uplink shared channel.

### (Hardware Configuration)

Note that the block diagrams that have been used to describe the above embodiments illustrate blocks in functional units. These functional blocks (components) may be implemented in arbitrary combinations of at least one of hardware or software. Further, the method for implementing each functional block is not particularly limited. That is, each functional block may be implemented by a single apparatus physically or logically aggregated, or may be implemented by directly or indirectly connecting two or more physically or logically separate apparatuses (in a wired manner, a radio manner, or the like, for example) and using these apparatuses. The functional block may be realized by combining the one apparatus or the plurality of apparatuses with software.

Here, the function includes, but is not limited to, determining, judging, calculating, computing, processing, deriving, investigating, searching, ascertaining, receiving, transmitting, outputting, accessing, solving, selecting, choosing, establishing, comparing, assuming, expecting, regarding, broadcasting, notifying, communicating, forwarding, configuring, reconfiguring, allocating, mapping, assigning, and the like. For example, a functional block (component) that has a transmission function may be referred to as a transmitting section (transmitting unit), a transmitter, and the like. In any case, as described above, the implementation method is not particularly limited.

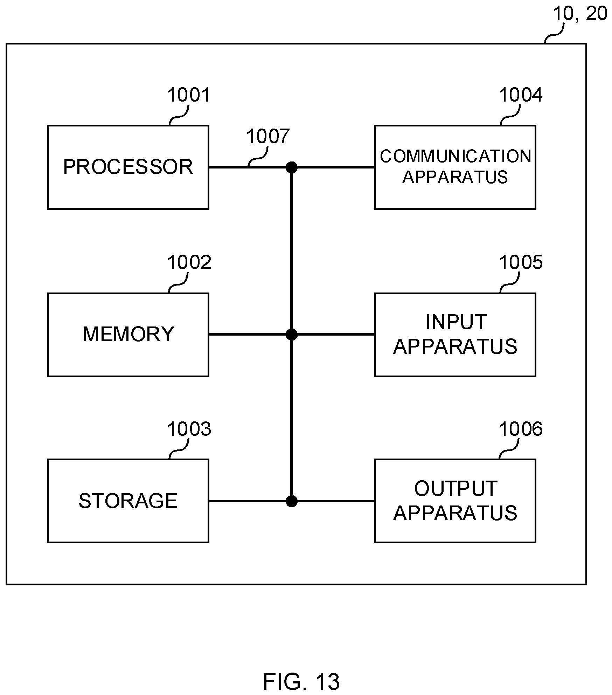

For example, the base station, the user terminal, and the like according to one embodiment of the present disclosure may function as a computer that executes the processing of the radio communication method of the present disclosure. Fig. 13 is a diagram illustrating an example of a hardware configuration of the base station and the user terminal according to one embodiment. Physically, the above-described base station 10 and user terminal 20 may be formed as a computer apparatus that includes a processor 1001, a memory 1002, a storage 1003, a communication apparatus 1004, an input apparatus 1005, an output apparatus 1006, a bus 1007, and the like.

Note that in the present disclosure, the terms such as an apparatus, a circuit, a device, a section, or a unit can be replaced with each other. The hardware configuration of the base station 10 and the user terminal 20 may be designed to include one or more of the apparatuses illustrated in the drawings, or may be designed not to include some apparatuses.

For example, although only one processor 1001 is shown, a plurality of processors may be provided. Further, the processing may be executed by one processor, or the processing may be executed by two or more processors simultaneously or sequentially, or using other methods. Note that the processor 1001 may be implemented with one or more chips.

Each function of the base station 10 and the user terminal 20 is implemented by given software (program) being read on hardware such as the processor 1001 and the memory 1002, by which the processor 1001 performs operations, controlling communication via the communication apparatus 1004, and controlling at least one of reading or writing of data at the memory 1002 and the storage 1003.

The processor 1001 may control the whole computer by, for example, running an operating system. The processor 1001 may be implemented by a central processing unit (CPU) including an interface with peripheral equipment, a control apparatus, an operation apparatus, a register, and the like. For example, at least a part of the above-described control section 110 (210), transmitting/receiving section 120 (220), and the like may be implemented by the processor 1001.

The processor 1001 reads programs (program codes), software modules, data, etc. from at least one of the storage 1003 or the communication apparatus 1004 into the memory 1002, and performs various types of processing according to these. As the program, a program that causes a computer to execute at least a part of the operation described in the above-described embodiment is used. For example, the control section 110 (210) may be implemented by control programs that are stored in the memory 1002 and that operate on the processor 1001, and other functional blocks may be implemented likewise.

The memory 1002 is a computer-readable recording medium, and may include, for example, at least one of a read only memory (ROM), an erasable programmable ROM (EPROM), an electrically EPROM (EEPROM), a random access memory (RAM), or other appropriate storage media. The memory 1002 may be referred to as a register, a cache, a main memory (primary storage apparatus), and the like. The memory 1002 can store programs (program codes), software modules, etc. that are executable for implementing the radio communication method according to one embodiment of the present disclosure.

The storage 1003 is a computer-readable recording medium, and may include, for example, at least one of a flexible disk, a floppy (registered trademark) disk, a magneto-optical disk (for example, a compact disc ROM (CD-ROM) and the like), a digital versatile disk, a Blu-ray (registered trademark) disk), a removable disk, a hard disk drive, a smart card, a flash memory device (for example, a card, a stick, or a key drive), a magnetic stripe, a database, a server, or other appropriate storage media. The storage 1003 may be referred to as "secondary storage apparatus."

The communication apparatus 1004 is hardware (transmission/reception device) for performing inter-computer communication via at least one of a wired network or a wireless network, and is referred to as, for example, a network device, a network controller, a network card, a communication module, and the like. The communication apparatus 1004 may include a high frequency switch, a duplexer, a filter, a frequency synthesizer, and the like in order to implement, for example, at least one of frequency division duplex (FDD) or time division duplex (TDD). For example, the transmitting/receiving section 120 (220), the transmission/reception antenna 130 (230), and the like described above may be implemented by the communication apparatus 1004. The transmitting/receiving section 120 (220) may be implemented by being physically or logically separated into the transmitting section 120a (220a) and the receiving section 120b (220b).

The input apparatus 1005 is an input device for receiving input from the outside (for example, a keyboard, a mouse, a microphone, a switch, a button, a sensor and so on). The output apparatus 1006 is an output device that performs output to the outside (for example, a display, a speaker, a light emitting diode (LED) lamp, or the like). Note that the input apparatus 1005 and the output apparatus 1006 may be provided in an integrated structure (for example, a touch panel).

Furthermore, these pieces of apparatus, including the processor 1001, the memory 1002 and so on are connected by the bus 1007 so as to communicate information. The bus 1007 may be formed with a single bus, or may be formed with buses that vary between pieces of apparatus.

Further, the base station 10 and the user terminal 20 may include hardware such as a microprocessor, a digital signal processor (DSP), an application specific integrated circuit (ASIC), a programmable logic device (PLD), or a field programmable gate array (FPGA), and some or all of the functional blocks may be implemented by using the hardware. For example, the processor 1001 may be implemented with at least one of these pieces of hardware.

### (Variations)

Note that terms described in the present disclosure and terms necessary for understanding the present disclosure may be replaced with terms that have the same or similar meanings. For example, a channel, a symbol, and a signal (signal or signaling) may be replaced with each other. Further, the signal may be a message. The reference signal can be abbreviated as an RS, and may be referred to as a pilot, a pilot signal, and the like, depending on which standard applies. Further, a component carrier (CC) may be referred to as a cell, a frequency carrier, a carrier frequency, and the like.

A radio frame may be comprised of one or more periods (frames) in the time domain. Each of the one or more periods (frames) included in the radio frame may be referred to as a subframe. Further, the subframe may include one or more slots in the time domain. The subframe may be a fixed time duration (for example, 1 ms) that is not dependent on numerology.

Here, the numerology may be a communication parameter used for at least one of transmission or reception of a given signal or channel. For example, the numerology may indicate at least one of subcarrier spacing (SCS), a bandwidth, a symbol length, a cyclic prefix length, a transmission time interval (TTI), the number of symbols per TTI, a radio frame configuration, specific filtering processing performed by a transceiver in the frequency domain, or specific windowing processing performed by a transceiver in the time domain.

The slot may include one or more symbols in the time domain (orthogonal frequency division multiplexing (OFDM) symbols, single carrier frequency division multiple access (SC-FDMA) symbols, and the like). Also, a slot may be a time unit based on numerology.

The slot may include a plurality of mini slots. Each mini slot may include one or more symbols in the time domain. Further, the mini slot may be referred to as a subslot. Each mini slot may include fewer symbols than the slot. A PDSCH (or PUSCH) transmitted in a time unit larger than the mini slot may be referred to as "PDSCH (PUSCH) mapping type A". A PDSCH (or a PUSCH) transmitted using a mini slot may be referred to as PDSCH (PUSCH) mapping type B.

A radio frame, a subframe, a slot, a mini slot and a symbol all represent the time unit in signal communication. The radio frame, the subframe, the slot, the mini slot, and the symbol may be called by other applicable names, respectively. Note that time units such as a frame, a subframe, a slot, a mini slot, and a symbol in the present disclosure may be replaced with each other.

For example, one subframe may be referred to as TTI, a plurality of consecutive subframes may be referred to as TTI, or one slot or one mini slot may be referred to as TTI. That is, at least one of the subframe or the TTI may be a subframe (1 ms) in the existing LTE, may be a period shorter than 1 ms (for example, one to thirteen symbols), or may be a period longer than 1 ms. Note that the unit to represent the TTI may be referred to as a "slot," a "mini slot" and so on, instead of a "subframe."

Here, a TTI refers to the minimum time unit of scheduling in radio communication, for example. For example, in the LTE system, a base station performs scheduling to allocate radio resources (a frequency bandwidth, transmission power, and the like that can be used in each user terminal) to each user terminal in TTI units. Note that the definition of TTIs is not limited to this.

The TTI may be a transmission time unit of a channel-coded data packet (transport block), a code block, a codeword, etc. or may be a processing unit of scheduling, link adaptation, etc. When the TTI is given, a time interval (e.g., the number of symbols) to which a transport block, a code block, a codeword, or the like is actually mapped may be shorter than the TTI.

Note that, when one slot or one mini slot is referred to as a "TTI," one or more TTIs (that is, one or multiple slots or one or more mini slots) may be the minimum time unit of scheduling. Also, the number of slots (the number of mini slots) to constitute this minimum time unit of scheduling may be controlled.

A TTI having a time duration of 1 ms may be referred to as a usual TTI (TTI in 3GPP Rel. 8 to 12), a normal TTI, a long TTI, a usual subframe, a normal subframe, a long subframe, a slot, or the like. A TTI that is shorter than the usual TTI may be referred to as a shortened TTI, a short TTI, a partial TTI (or fractional TTI), a shortened subframe, a short subframe, a mini slot, a subslot, a slot, or the like.

Note that a long TTI (for example, a normal TTI, a subframe, etc.) may be replaced with a TTI having a time duration exceeding 1 ms, and a short TTI (for example, a shortened TTI) may be replaced with a TTI having a TTI duration less than the TTI duration of a long TTI and not less than 1 ms.

A resource block (RB) is the unit of resource allocation in the time domain and the frequency domain, and may include one or more contiguous subcarriers in the frequency domain. The number of subcarriers included in the RB may be the same regardless of the numerology, and may be twelve, for example. The number of subcarriers included in an RB may be determined based on a numerology.

Also, an RB may include one or more symbols in the time domain, and may be one slot, one mini slot, one subframe or one TTI in length. One TTI, one subframe, etc. may each be comprised of one or more resource blocks.

Note that one or more RBs may be referred to as a physical resource block (PRB), a sub-carrier group (SCG), a resource element group (REG), a PRB pair, an RB pair, and the like.

Furthermore, a resource block may include one or more resource elements (REs). For example, one RE may be a radio resource field of one subcarrier and one symbol.

A bandwidth part (BWP) (which may be referred to as a partial bandwidth or the like) may represent a subset of contiguous common resource blocks (RBs) for a given numerology in a given carrier. Here, the common RB may be specified by the index of the RB based on a common reference point of the carrier. PRBs may be defined in a BWP and numbered within the BWP.

The BWP may include a BWP for UL (UL BWP) and a BWP for DL (DL BWP). For the UE, one or more BWPs may be configured within one carrier.

At least one of the configured BWPs may be active, and the UE does not have to expect transmission/reception of a given signal/channel outside the active BWP. Note that "cell", "carrier", etc. in the present disclosure may be replaced with "BWP".

Note that the structures of radio frames, subframes, slots, mini slots, symbols and so on described above are merely examples. For example, configurations such as the number of subframes included in a radio frame, the number of slots per subframe or radio frame, the number of mini slots included in a slot, the number of symbols and RBs included in a slot or a mini slot, the number of subcarriers included in an RB, the number of symbols in a TTI, the symbol length, the length of cyclic prefix (CP), and the like can be variously changed.

The information, parameters, etc. described in the present disclosure may be represented using absolute values, or may be represented using relative values with respect to given values, or may be represented using other corresponding information. For example, a radio resource may be specified by a given index.

The names used for parameters etc. in the present disclosure are in no respect limiting. Further, any mathematical expression or the like that uses these parameters may differ from those explicitly disclosed in the present disclosure. Since various channels (PUCCH, PDCCH, and the like) and information elements can be identified by any suitable names, various names allocated to these various channels and information elements are not restrictive names in any respect.

The information, signals, etc. described in the present disclosure may be represented using any of a variety of different technologies. For example, data, instructions, commands, information, signals, bits, symbols and chips, all of which may be referenced throughout the herein-contained description, may be represented by voltages, currents, electromagnetic waves, magnetic fields or particles, optical fields or photons, or any combination of these.

Information, signals, etc. can be output in at least one of a direction from a higher layer to a lower layer or a direction from a lower layer to a higher layer. Information, signals and so on may be input and output via a plurality of network nodes.

The information, signals and so on that are input and/or output may be stored in a specific location (for example, in a memory), or may be managed in a control table. The information, signals, and the like to be input and output can be overwritten, updated, or appended. The output information, signals, and the like may be deleted. The information, signals and so on that are input may be transmitted to other pieces of apparatus.

Notification of information may be performed not only by using the aspects/embodiments described in the present disclosure but also using another method. For example, the notification of information in the present disclosure may be performed by using physical layer signaling (for example, downlink control information (DCI) or uplink control information (UCI)), higher layer signaling (for example, radio resource control (RRC) signaling, broadcast information (master information block (MIB)), system information block (SIB), or the like), or medium access control (MAC) signaling), another signal, or a combination thereof.

Note that the physical layer signaling may be referred to as Layer 1/Layer 2 (L1/L2) control information (L1/L2 control signal), L1 control information (L1 control signal), and the like. Further, the RRC signaling may be referred to as an RRC message, and may be, for example, an RRC connection setup message, an RRC connection reconfiguration message, and the like. Further, notification of the MAC signaling may be performed using, for example, an MAC control element (CE).

Also, reporting of given information (for example, reporting of information to the effect that "X holds") does not necessarily have to be sent explicitly, and can be sent implicitly (for example, by not reporting this piece of information, by reporting another piece of information, and so on).

Decisions may be made in values represented by one bit (0 or 1), may be made in Boolean values that represent true or false, or may be made by comparing numerical values (for example, comparison against a given value).

Software, whether referred to as "software," "firmware," "middleware," "microcode" or "hardware description language," or called by other names, should be interpreted broadly, to mean instructions, instruction sets, code, code segments, program codes, programs, subprograms, software modules, applications, software applications, software packages, routines, subroutines, objects, executable files, execution threads, procedures, functions and so on.

Also, software, commands, information and so on may be transmitted and received via communication media. For example, when software is transmitted from a website, a server, or another remote source by using at least one of a wired technology (coaxial cable, optical fiber cable, twisted pair, digital subscriber line (DSL), or the like) or a wireless technology (infrared rays, microwaves, and the like), at least one of the wired technology or the wireless technology is included within the definition of a transmission medium.

The terms "system" and "network" used in the present disclosure may be used interchangeably. The "network" may mean an apparatus (for example, a base station) included in the network.

In the present disclosure, terms such as "precoding", "precoder", "weight (precoding weight)", "quasi-co-location (QCL)", "transmission configuration indication state (TCI state)", "spatial relation", "spatial domain filter", "transmission power", "phase rotation", "antenna port", "antenna port group", "layer", "number of layers", "rank", "resource", "resource set", "resource group", "beam", "beam width", "beam angle", "antenna", "antenna element", and "panel" can be used interchangeably.

In the present disclosure, terms such as "base station (BS)", "radio base station", "fixed station", "NodeB", "eNodeB (eNB)", "gNodeB (gNB)", "access point", "transmission point (TP)", "reception point (RP)", "transmission/reception point (TRP)", "panel", "cell", "sector", "cell group", "carrier", and "component carrier", can be used interchangeably. The base station may be referred to as a term such as a macro cell, a small cell, a femto cell, or a pico cell.

The base station can accommodate one or more (for example, three) cells. In a case where the base station accommodates a plurality of cells, the entire coverage area of the base station can be partitioned into a plurality of smaller areas, and each smaller area can provide communication services through a base station subsystem (for example, small base station for indoors (remote radio head (RRH))). The term "cell" or "sector" refers to a part or the whole of a coverage area of at least one of the base station or the base station subsystem that performs a communication service in this coverage.

In the present disclosure, the terms such as "mobile station (MS)", "user terminal", "user equipment (UE)", and "terminal" can be used interchangeably.

The mobile station may be referred to as a subscriber station, mobile unit, subscriber station, wireless unit, remote unit, mobile device, wireless device, wireless communication device, remote device, mobile subscriber station, access terminal, mobile terminal, wireless terminal, remote terminal, handset, user agent, mobile client, client, or some other suitable terms.

At least one of the base station and mobile station may be called as a transmission apparatus, a reception apparatus, a radio communication apparatus, and the like. Note that at least one of the base station or the mobile station may be a device mounted on a moving object, a moving object itself, and the like. The moving object may be a transportation (for example, a car, an airplane, or the like), an unmanned moving object (for example, a drone, an autonomous car, or the like), or a (manned or unmanned) robot. Note that at least one of the base station or the mobile station also includes an apparatus that does not necessarily move during a communication operation. For example, at least one of the base station or the mobile station may be an Internet of Things (IoT) device such as a sensor.

Further, the base station in the present disclosure may be replaced with the user terminal. For example, each aspect/embodiment of the present disclosure may be applied to a configuration in which communication between the base station and the user terminal is replaced with communication among a plurality of user terminals (which may be referred to as, for example, device-to-device (D2D), vehicle-to-everything (V2X), and the like). In this case, the user terminal 20 may have the function of the above-described base station 10. Further, terms such as "uplink" and "downlink" may be replaced with terms corresponding to communication between terminals (for example, "side"). For example, an uplink channel, a downlink channel, etc. may be replaced with a side channel.

Likewise, a user terminal in the present disclosure may be replaced with a base station. In this case, the base station 10 may have the functions of the user terminal 20 described above.

In the present disclosure, an operation performed by the base station may be performed by an upper node thereof in some cases. In a network including one or more network nodes with base stations, it is clear that various operations performed for communication with a terminal can be performed by a base station, one or more network nodes (examples of which include but are not limited to mobility management entity (MME) and serving-gateway (S-GW)) other than the base station, or a combination thereof.

The aspects/embodiments illustrated in the present disclosure may be used individually or in combinations, which may be switched depending on the mode of implementation. Further, the order of processing procedures, sequences, flowcharts, and the like of the aspects/embodiments described in the present disclosure may be re-ordered as long as there is no inconsistency. For example, the methods described in the present disclosure have presented various step elements using an exemplary order, and are not limited to the presented specific order.

Each aspect/embodiment described in the present disclosure may be applied to a system using long term evolution (LTE), LTE-advanced (LTE-A), LTE-beyond (LTE-B), SUPER 3G, IMT-Advanced, 4th generation mobile communication system (4G), 5th generation mobile communication system (5G), 6th generation mobile communication system (6G), xth generation mobile communication system (xG) (x is, for example, an integer or decimal), future radio access (FRA), new radio access technology (RAT), new radio (NR), new radio access (NX), future generation radio access (FX), global system for mobile communications (GSM (registered trademark)), CDMA 2000, ultra mobile broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), or another appropriate radio communication method, a next generation system expanded on the basis of these, and the like. Further, a plurality of systems may be combined and applied (for example, a combination of LTE or LTE-A and 5G, and the like).

The phrase "based on" as used in the present disclosure does not mean "based only on", unless otherwise specified. In other words, the phrase "based on" means both "based only on" and "based at least on."

All references to the elements using designations such as "first" and "second" as used in the present disclosure do not generally limit the amount or sequence of these elements. These designations can be used in the present disclosure, as a convenient way of distinguishing between two or more elements. In this way, reference to the first and second elements does not imply that only two elements may be employed, or that the first element must precede the second element in some way.

The term "determining" as used in the present disclosure may include a wide variety of operations. For example, "determining" may be regarded as "determining" judging, calculating, computing, processing, deriving, investigating, looking up (or searching or inquiring) (for example, looking up in a table, database, or another data structure), ascertaining, and the like.

Furthermore, to "judge" and "determine" as used herein may be interpreted to mean making judgements and determinations related to receiving (for example, receiving information), transmitting (for example, transmitting information), inputting, outputting, accessing (for example, accessing data in a memory) and so on.

In addition, to "judge" and "determine" as used herein may be interpreted to mean making judgements and determinations related to resolving, selecting, choosing, establishing, comparing and so on. In other words, to "judge" and "determine" as used herein may be interpreted to mean making judgements and determinations related to some action.

In addition, "determining" may be replaced with "assuming", "expecting", "considering", or the like.

The "maximum transmission power" described in the present disclosure may mean a maximum value of transmission power, nominal UE maximum transmit power, or rated UE maximum transmit power.

The terms "connected" and "coupled" used in the present disclosure, or any variation of these terms mean all direct or indirect connections or coupling between two or more elements, and may include the presence of one or more intermediate elements between two elements that are "connected" or "coupled" to each other. The coupling or connection between the elements may be physical, logical, or a combination of these. For example, "connection" may be replaced with "access".

In the present disclosure, when two elements are connected together, it is conceivable that the two elements are "connected" or "coupled" to each other by using one or more electrical wires, cables, printed electrical connections, and the like, and, as some non-limiting and non-inclusive examples, by using electromagnetic energy having wavelengths in the radio frequency domain, microwave region, or optical (both visible and invisible) region, or the like.

In the present disclosure, the terms "A and B are different" may mean "A and B are different from each other". Note that the phrase may mean that "A and B are different from C". The terms such as "separate", "coupled", and the like may be interpreted similarly to "different".

When "include", "including", and variations of these are used in the present disclosure, these terms are intended to be inclusive similarly to the term "comprising". Moreover, the term "or" used in the present disclosure is intended to be not an exclusive-OR.

In the present disclosure, when articles are added by translation, for example, as "a", "an", and "the" in English, the present disclosure may include that nouns that follow these articles are plural.

In the above, the invention according to the present disclosure has been described in detail; however, it is obvious to those skilled in the art that the invention according to the present disclosure is not limited to the embodiments described in the present disclosure. The invention according to the present disclosure can be embodied with various corrections and in various modified aspects, without departing from the spirit and scope of the invention defined on the basis of the description of claims. Consequently, the description of the present disclosure is provided only for the purpose of explaining examples, and should by no means be construed to limit the invention according to the present disclosure in any way.

## Claims

1. A terminal comprising:
a receiving section that receives information regarding priority of UL transmission; and
a control section that, in a case where a plurality of UL transmissions with different priorities overlap in a time domain, controls transmission processing of the plurality of UL transmissions on the basis of at least one of a UL signal included in each of UL transmissions, a UL channel used for each of the UL transmissions, and a resource of an uplink control channel used for each of the UL transmissions.

2. The terminal according to claim 1, wherein the control section performs the plurality of UL transmissions by using any one of a first resource used for UL transmission with a first priority, a second resource used for UL transmission with a second priority, and a third resource different from the first resource and the second resource.

3. The terminal according to claim 1 or 2, wherein the control section judges whether to perform simultaneous transmission of the plurality of UL transmissions with different priorities or not on the basis of at least one of information notified by higher layer signaling and terminal capability information to report.

4. The terminal according to any one of claims 1 to 3, wherein, in a case where an uplink shared channel and an uplink control channel used for transmission of uplink control information overlap in a time domain, the control section judges transmission of the uplink control information on the basis of a UL signal transmitted by the uplink shared channel.

5. A radio communication method of a terminal, the radio communication method comprising:
a step of receiving information regarding priority of UL transmission; and
a step of, in a case where a plurality of UL transmissions with different priorities overlap in a time domain, controlling transmission processing of the plurality of UL transmissions on the basis of at least one of a UL signal included in each of UL transmissions, a UL channel used for each of the UL transmissions, and a resource of an uplink control channel used for each of the UL transmissions.

6. A base station comprising:
a transmitting section that transmits information regarding priority of UL transmission; and
a control section that, in a case where a plurality of UL transmissions with different priorities overlap in a time domain, controls reception processing of the plurality of UL transmissions in which transmission is controlled on the basis of at least one of a UL signal included in each of UL transmissions, a UL channel used for each of the UL transmissions, and a resource of an uplink control channel used for each of the UL transmissions.
